(19) Europäisches Patentamt
European Patent Office
Office européen des brevets

(11) **EP 2 152 034 A2**

(12) **EUROPEAN PATENT APPLICATION**

(43) Date of publication:
**10.02.2010 Bulletin 2010/06**

(51) Int Cl.:
***H04W 16/26*** (2009.01)

(21) Application number: **09007898.1**

(22) Date of filing: **16.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **08.08.2008 JP 2008205760**

(71) Applicant: **Hitachi Communication Technologies, Ltd.**
**Tokyo (JP)**

(72) Inventors:
• **Fujishima, Kenzaburo**
  **Tokyo 100-8220 (JP)**
• **Uwano, Koki**
  **Tokyo 100-8220 (JP)**

(74) Representative: **Beetz & Partner**
**Patentanwälte**
**Steinsdorfstrasse 10**
**80538 München (DE)**

(54) **A radio communication system, a repeater apparatus and a control method of the repeater**

(57) Provided is a radio communication system including a plurality of base stations (101-1, 101-2, 101-3) and a repeater apparatus (108), in which the repeater apparatus (108) amplifies and transmits a radio signal received from at least one of the plurality of base stations (101), and controls a domain in which the radio signal is transmitted based on a traffic amount of each of the plurality of base stations (101). Accordingly, the number of installed base stations (101) which are costly is reduced, and an operating rate of the respective base stations (101) is gained along with the decrease in number of installed base stations (101).

**FIG. 3A**

EP 2 152 034 A2

**Description**

CLAIM OF PRIORITY

The present application claims priority from Japanese patent application JP2008-205760 filed on August 8, 2008, the content of which is hereby incorporated by reference into this application.

BACKGROUND OF THE INVENTION

A technology disclosed in the present specification relates to a radio communication system including a repeater apparatus and a repeater control unit as constituent elements.

First, the background of a radio mobile communication system is described.

In the radio communication system, a base station device connected to a backbone network and a mobile station device having only a radio I/F transmit data signals (also including audio signals) wirelessly to each other.

As an interface standard of the radio portion, there is known, for example, Ultra Mobile Broadband (UMB). The UMB belongs to a so-called 3.9-th generation mobile communication system. In a standards document, the rule of a method of transmitting the data signal, a control signal, and so on, is defined for each of the base station and the mobile station.

The UMB adopts an orthogonal frequency division multiple access (OFDMA) system and a code division multiple access (CDMA) system in order to transmit the data signal and the control signal. The CDMA signal is mapped on a resource block of the OFDMA after the discrete Fourier transform (DFT) has been performed, and thus the UMB is allowed to be regarded as an OFDMA-based system. Long Term Evolution (LTE) being a communication system of the same generation as the UMB also adopts the OFDMA system, and the OFDMA system is a mainstream after the 3.9-th generation.

As of 2008, the standardization activity on the standard of IMT-Advanced which is considered as the fourth generation has started in earnest. When the 3.9-th generation is treated as a migration generation to the fourth generation, there is the high possibility that the OFDMA will be adopted as the communication system.

Prior to the standardization activity, in 2007, a frequency band allocation for the fourth generation mobile communication has been determined in the World Radiocommunication Conference 2007 (WRC07). The highlight is 3.5 GHz band that enables the band width of 100 MHz to be ensured in both of uplink and downlink.

In the conventional mobile communication system including the 3.9-th generation, the use of an 800 MHz band and a 2 GHz band is mainstream. On the contrary, the 3.5 GHz band is a high frequency band, and there is concern that the propagation distance of radio waves is shortened. In other words, in order to ensure the conventional coverage area of the mobile communication system, there is a need to install several times more base stations than in the conventional art.

Subsequently, the background of the repeater apparatus is described.

In a cellular system in which the base station devices are spread, there frequently occurs an area (dead zone) in which arrival of radio waves is difficult. The dead zone is liable to occur in underground cities, indoors, and in high-rises. In order to solve the above-mentioned problem, there is installed a repeater apparatus that relays radio waves with respect to the base stations.

As a method of realizing the repeater apparatus, there can be applied, in principle, a method involving performing digital signal processing to remove unnecessary interference, or a method involving decoding packets once to reconfigure a transmit signal, and transmitting the transmit signal to thereby enhance the performance of the repeater apparatus. However, the buffering or repeating process of the signal makes processing time long, and accordingly the transmit signal is delayed by several frames to several tens frames with respect to a signal used for the base station and the mobile station to directly communicate with each other. With the above-mentioned delay, for example, a repeat request of hybrid automatic repeat request (ARQ) is not made in time, and a requirement for the radio interface standard (UMB and so on) of the mobile communication cannot be achieved. Hence, as the repeater apparatus, a system of amplifying a radio frequency (RF) signal is general.

JP 2005-252938 A discloses a repeater apparatus having a directional antenna. A desired signal to be subjected to relay amplification, and an undesired signal not to be subjected to relay amplification arrive at the repeater apparatus, but the undesired signal can be suppressed by the directional antenna to execute the relay amplification.

3GPP2, C30-20060327-023R2, Naga Bhushan, "QUALCOMM Proposal for 3GPP2 Air Interface Evolution Phase 2, Rev. 2", p.125, 2006/3 discloses a technology of reducing an interference between cells.

3GPP2, C. S0084-001-0, Version 2.0, "Physical Layer for Ultra Mobile Broadband (UMB) Air Interface Specification", p.4-41, 2007/8 discloses a technology of controlling an interference between sectors.

## SUMMARY OF THE INVENTION

An ultimate object of this invention is to reduce the number of installed base stations which are costly.

A reduction in the number of installed base stations causes two problems, In other words, (1) a reduction in coverage area, and (2) a deterioration in throughput per mobile station. The problem (1) can be eliminated by installation of a repeater apparatus. The problem (2) can be further classified into two problems, In other words, (A) a deterioration in throughput which is caused by a shortage of an absolute number of base stations, and (B) a deterioration in throughput which is accompanied by an increase in the number of mobile stations connected to the base station.

Solving the problem (A) is out of the scope of this invention. In order to solve the problem (A), the number of base stations should be increased. The problem (B) can be solved by an ingenuity and is to be solved by this invention.

The problem (B) is described in more detail. The throughput per mobile station is a result of dividing the throughput when the mobile stations occupy all of communication resources of the base station by the occupancy. The occupancy is in reverse proportion to the number of mobile stations connected to the base station. In other words, the throughput per mobile station is reduced more as the number of mobile stations connected to the base station increases more.

The number of mobile stations connected to the base station is unequal among the base stations, and hence the throughputs of the mobile stations connected to the base station originally having a larger number of connected mobile stations are improved when the number of mobile stations is made uniform among the base stations. As a result, the throughputs of a smaller number of mobile stations are reduced whereas the throughputs of a larger number of mobile stations can be improved.

Further, the number of mobile stations connected to the base station varies with time, and hence it is necessary to control the number thereof to be uniform while adjusting to connection environment.

In summary, this invention has been made to achieve the following three objects.

· To make efficient use of a repeater apparatus to cover a decrease in number of installed base stations.
· To make uniform the number of connected mobile stations among the base stations.
· To control the number of connected mobile station to be uniform while adjusting to its time variation number of connected mobile station.

According to a representative invention disclosed in this application, there is provided a radio communication system, comprising: a plurality of base stations; and a repeater apparatus, wherein the repeater apparatus is configured to: amplify and transmit a radio signal received from at least one of the plurality of base stations; and control a domain in which the radio signal is transmitted based on a traffic amount of each of the plurality of base stations.

With the radio communication system and the repeater apparatus according to one embodiment of this invention, the number of connected mobile stations can be made uniform dynamically among the base stations. As a result, though a decrease in the throughputs of a smaller number of mobile stations is induced, the throughputs of a larger number of mobile stations can be improved. Further, the loads are uniformed among the base stations, whereby idle or almost-nonoperating base stations can be reduced, and the cost-effectiveness of the base station installation can be enhanced. Further, the number of installed base stations can be reduced by introduction of the repeater apparatus so that the costs necessary for the system construction can be suppressed.

## BRIEF DESCRIPTION OF THE DRAWINGS

FIG. 1 is an explanatory diagram illustrating an example of a radio communication system according to a first embodiment of this invention.

FIG. 2A is an explanatory diagram illustrating a first problem on a conventional radio communication system.

FIG. 2B is an explanatory diagram illustrating a second problem on the conventional radio communication system.

FIG. 3A is an explanatory diagram illustrating the radio communication system according to the first embodiment of this invention.

FIG. 3B is an explanatory diagram illustrating an example of a load distribution improvement of the radio communication system according to the first embodiment of this invention.

FIG. 4A is an explanatory diagram illustrating an output example of a directional beam to a base station from a repeater according to the first embodiment of this invention.

FIG. 4B is an explanatory diagram illustrating an output example of a directional beam to a mobile station from the repeater according to the first embodiment of this invention.

FIG. 5A is an explanatory diagram illustrating an example of a wireless communication path in the first embodiment of this invention.

FIG. 5B is a diagram for describing a receive timing difference between two types of receive signals in the first embodiment of this invention.

FIGS. 6A and 6B are explanatory diagrams illustrating the advantages obtained by the first embodiment of this invention.

FIG. 7 is an explanatory diagram illustrating an example of quantitative evaluation results of an increase in a coverage area in the first embodiment of this invention.

FIG. 8 is an explanatory diagram illustrating a network configuration according to the first embodiment of this invention.

FIG. 9 is an explanatory diagram illustrating a control sequence according to the first embodiment of this invention.

FIG. 10A is an explanatory diagram illustrating an example of a format of repeater state information transmitted in the first embodiment of this invention.

FIG. 10B is an explanatory diagram illustrating an example of a format of the repeater state information recorded in the first embodiment of this invention.

FIG. 11A is an explanatory diagram illustrating a first example of a format of traffic information transmitted in the first embodiment of this invention.

FIG. 11B is an explanatory diagram illustrating a second example of the format of the traffic information transmitted in the first embodiment of this invention.

FIG. 12A is an explanatory diagram illustrating a first example of a format of the traffic information recorded in the first embodiment of this invention.

FIG. 12B is an explanatory diagram illustrating a second example of the format of the traffic information recorded in the first embodiment of this invention.

FIG. 13 is a flowchart illustrating an operation of a repeater control unit according to the first embodiment of this invention.

FIGS. 14A and 14B are explanatory diagrams illustrating an example of a format of control information transmitted to the repeater according to the first embodiment of this invention.

FIG. 15 is a flowchart illustrating an operation of the repeater according to the first embodiment of this invention.

FIG. 16 is a block diagram illustrating a device configuration of the repeater according to the first embodiment of this invention.

FIG. 17 is a diagram illustrating a configuration of a state measurement unit according to the first embodiment of this invention.

FIG. 18 is an explanatory diagram illustrating a configuration of a switch periphery inside of the repeater according to the first embodiment of this invention.

FIGS. 19A and 19B are tables illustrating a changeover example of the switches in the repeater according to the first embodiment of this invention.

FIG. 20 is a flowchart illustrating repeater input/output control according to the first embodiment of this invention.

FIGS. 21A to 21D are explanatory diagrams illustrating an example of the input/output control on a downlink traffic side of the repeater according to the first embodiment of this invention.

FIG. 22 is an explanatory diagram illustrating an example of a stable configuration of the repeater according to the first embodiment of this invention.

FIGS. 23A to 23D are explanatory diagrams illustrating an example of the input/output control on the uplink traffic side of the repeater according to the first embodiment of this invention.

FIG. 24 is an explanatory diagram illustrating a configuration of a switch periphery inside of a repeater according to a second embodiment of this invention.

FIG. 25 is a flowchart illustrating a repeater input/output control according to the second embodiment of this invention.

FIGS. 26A to 26D are explanatory diagrams illustrating an example of the input/output control on the uplink traffic side of the repeater according to the second embodiment of this invention.

FIG. 27 is an explanatory diagram illustrating another example of the format of the repeater state information transmitted in the first embodiment of this invention.

FIG. 28 is an explanatory diagram illustrating a control of an attenuator according to the second embodiment of this invention.

DETAILED DESCRIPTION OF THE PREFERRED EMBODIMENTS

There is provided a method of realizing an increase in coverage area of base stations and load distribution among the base stations with the use of a repeater in a radio communication system.

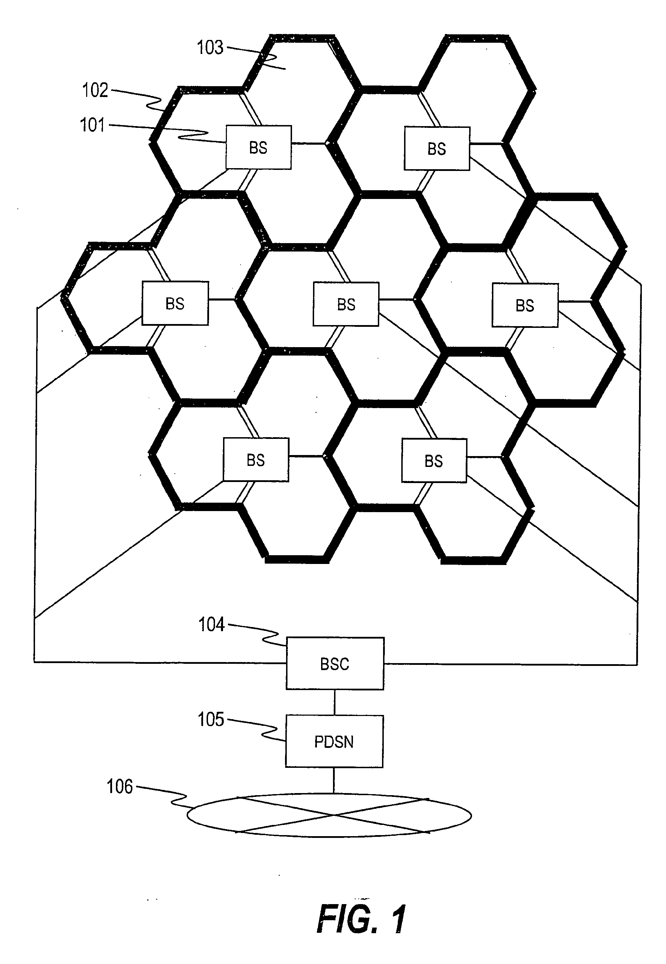

FIG. 1 is an explanatory diagram illustrating an example of a radio communication system according to a first embodiment of this invention.

Base stations (BS) 101 cover areas (domains surrounded by heavy lines in the example of FIG. 1) of cells 102, respectively, and each cell 102 is divided into a plurality of sectors 103 (three hexagonal domains around each base station 101 in the example of FIG. 1). Each base station 101 exchanges data with another base station or another communication system via a base station control unit (BSC) 104 and a packet data serving node (PDSN) 105. The base station 101 exchanges data with another communication system via an IP network 106.

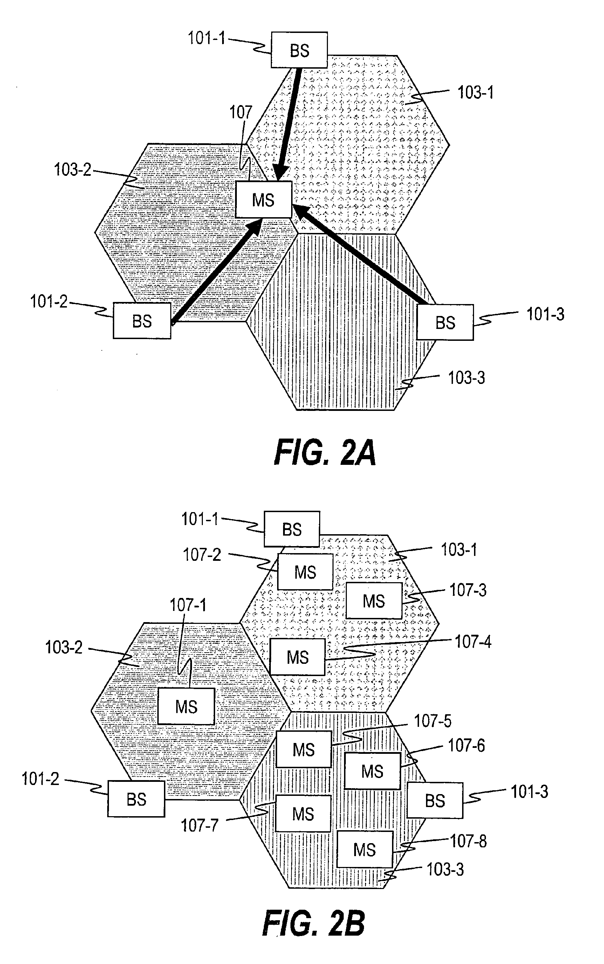

FIG. 2A is an explanatory diagram illustrating a first problem on a conventional radio communication system.

A mobile station (MS) 107 implements data communication with a base station 101-2 (desired base station). The mobile station 107 is located at an edge of a sector 103-2 that is covered with the desired base station, and thus the mobile station 107 receives interference from other base stations 101-1 and 101-3 in a downlink traffic with substantially the same electric power as that of a radio signal from the desired base station. As a result, a desired signal to undesired signal power ratio (DUR) is deteriorated, resulting in such a problem that the communication quality is deteriorated by interference in addition to deterioration due to the propagation attenuation.

In the radio communication system, there is a need to consider the equality of the communication capacity among the mobile stations. However, in order to ensure the equality of the mobile stations including a mobile station low in DUR, there is a need to sacrifice the communication capacity of the entire system. This is not preferable in view of the efficiency of the system.

This problem does not induce no problem on the mobile station located in the vicinity of the base station. This is a problem only on the mobile station located on the boundary of the sectors. In order to eliminate the above-mentioned problem, there is a need to reduce the interference among the sectors or the base stations.

FIG. 2B is an explanatory diagram illustrating a second problem on the conventional radio communication system.

A mobile station 107-1 communicates with the base station 101-2 with the sector 103-2 as a serving sector (SS). Likewise, three mobile stations 107-2, 107-3, and 107-4 communicate with the base station 101-1 with a sector 103-1 as the SS, and four mobile stations 107-5, 107-6, 107-7, and 107-8 communicate with the base station 101-3 with a sector 103-3 as the SS. In other words, FIG. 2B illustrates an example in which the number of mobile stations that communicate with each base station is different among the base stations.

The throughput of the mobile station is in inverse proportion to the number of mobile stations belonging to the sector. In other words, the throughput per mobile station is reduced more as the number of mobile stations increases. As a result, there arises a problem that services (guaranteed bandwidth) enjoyed by the mobile station are dispersed depending on the sector to be connected.

Further, when the guaranteed bandwidths of the respective mobile stations are identical with each other, there occurs a difference in operating rate among the sectors. In other words, under the condition that the guaranteed bandwidth is held constant, a larger amount of free communication resources occur in the sector as a smaller number of mobile stations belong to the sector. The operating rate is more deteriorated as the amount of free communication resources is larger, and hence there arises a problem that the operating rate (performance) to the base station installation costs is deteriorated.

In order to solve the problems posed in FIGS. 2A and 2B, this invention aims at providing a radio communication system which eliminates the problem on interference between the cells and is high in cost performance.

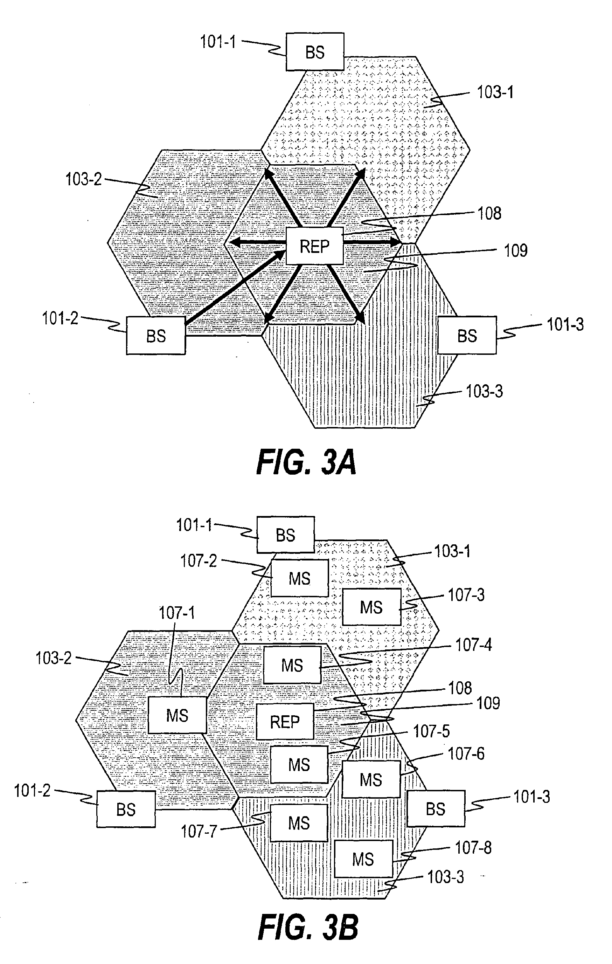

FIG. 3A is an explanatory diagram illustrating the radio communication system according to the first embodiment of this invention.

A repeater 108 is installed on boundaries of the sector 103-1, the sector 103-2, and the sector 103-3. The repeater 108 receives a transmit signal from the base station 101-2 by a directional antenna, and receives signals from the base stations 101-1 and 101-3 after reducing gains thereof by the directional antenna (that is, blocks the signals). The repeater 108 amplifies only a signal from the base station 101-2, and radiates the signal toward an area 109 produced by the repeater 108.

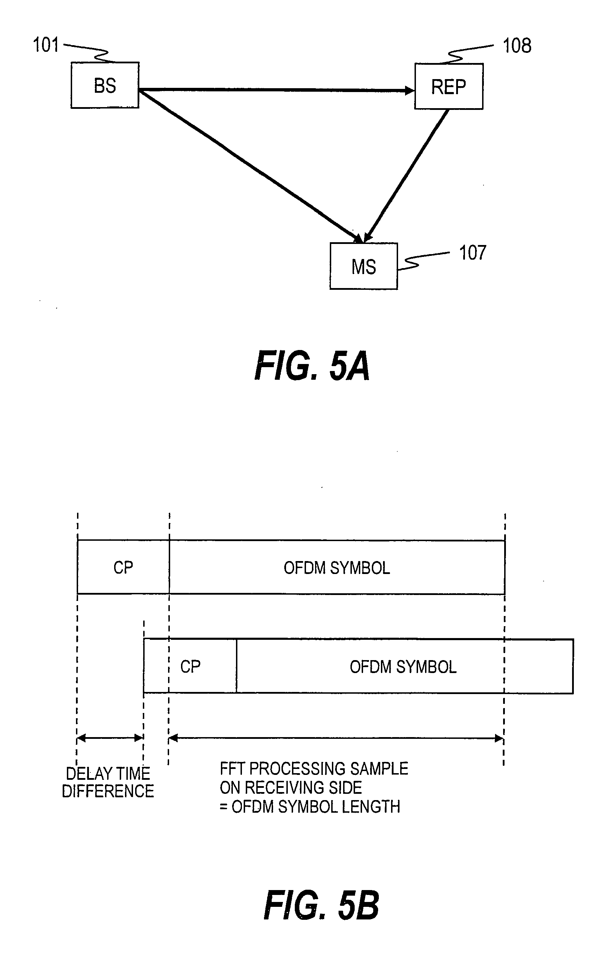

As a result, the same signal as that in the sector 103-2 is radiated in coverage area 109 of the repeater. In other words, an area of the sector 103-2 can be broadened. Strictly speaking, the propagation path length is extended via the repeater 108, and a delay caused by processing inside of the repeater occurs. For that reason, a time at which a signal routed through the repeater 108 is received at the mobile station is delayed with respect to a signal that is transmitted from the base station 101-2 to directly reach the mobile station. The reason that the delay time causes no problem under a given condition is described later with reference to FIGS. 5A and 5B.

Further, as a result that the repeater 108 amplifies the signal in the sector 103-2, the problem on the interference among the cells at the positions being originally the sector boundaries is eliminated. However, it is perceivable that the boundaries between the sector 103-2 and other sectors 103-1 and 103-3 are merely moved, but the problem on the interference among the sectors which is posed in FIG. 2A is not essentially eliminated. However, a signal to noise ratio (SNR) on the sector boundaries is improved as compared with a case in which there is no repeater 108. In other words, positions at which propagation attenuation is smaller are sector boundaries, and hence the inter-cell interference reducing technology can produce more effect. As the conventional inter-cell interference reducing technology, there has been well known a fractional frequency reuse (FFR, refer to 3GPP2, C30-20060327-023R2, Naga Bhushan, "QUALCOMM Proposal for 3GPP2 Air Interface Evolution Phase 2, Rev. 2", p.125, 2006/3 cited as the background).

FIG. 3B is an explanatory diagram illustrating an example of a load distribution improvement of the radio communication system according to the first embodiment of this invention.

An increase in coverage area of the sector 103-2 is implemented by using the repeater 108 as illustrated in FIG. 3A, whereby the respective mobile stations 107-1, 107-2, 107-3, 107-4, 107-5, 107-6, 107-7, and 107-8 of FIG. 2B alter the connection destination sectors (SS) as illustrated in FIG. 3B.

More specifically, three mobile stations 107-1, 107-4, and 107-5 communicate with the base station 101-2 via the sector 103-2, and two mobile stations 107-2 and 107-3 communicate with the base station 101-1 via the sector 103-1. Further, three mobile stations 107-6, 107-7, and 107-8 communicate with the base station 101-3 via the sector 103-3.

As a result, the number of mobile stations connected to the base stations 101-1, 101-2, and 101-3 is 1:3:4 in the example of FIG. 2B, but 3:2:3 in the example of FIG. 3B. Thus, it is understood that the load distribution is performed among the base stations.

In order to realize the load distribution, there is a need to relatively increase coverage area of the sector that is relatively small in traffic as compared with other sectors.

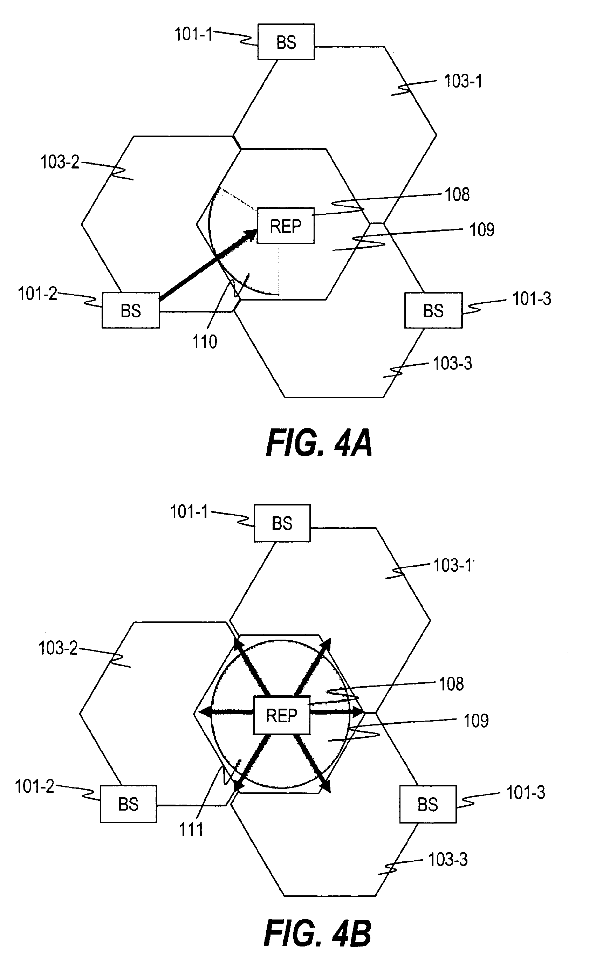

FIG. 4A is an explanatory diagram illustrating an output example of a directional beam to the base station from the repeater according to the first embodiment of this invention.

The repeater 108 receives downlink signals from the base stations by using a directional beam 110. The directional beam 110 blocks downlink signals from the base stations 101-1 and 101-3, and relatively emphasizes the signal from the base station 101-2. As a result, the repeater 108 can amplify only a desired downlink signal without amplifying useless interference within coverage area 109 of the repeater 108.

Further, the repeater 108 transmits uplink signals from the mobile stations to only the base station 101-2 by using the above-mentioned directional beam 110. As a result, unnecessary interference is not affected to the base stations 101-1 and 101-3.

FIG. 4B is an explanatory diagram illustrating an output example of a directional beam to the mobile station from the repeater according to the first embodiment of this invention.

The repeater 108 transmits a downlink signal from the base station by using a directional beam 111. The directional beam 111 allows the amplified downlink signal to be transmitted over the entire coverage area 109 of the repeater 108. The downlink signal to be transmitted depends on the directional beam 110 to the base station as illustrated in FIG. 4A. Specifically, the signal received by using the directional beam 110 is amplified by the repeater 108, and transmitted by using the directional beam 111.

On the other hand, in the uplink traffic, the repeater 108 receives the uplink signals in all directions viewed from the repeater 108 by means of the directional beam 111, amplifies the received signals, and transmits the amplified signals to the base station 101-2, for example, by means of the directional beam 110 illustrated in FIG. 4A.

In the above-mentioned method, in the uplink traffic, there can occur a phenomenon that the uplink signal transmitted to a destination of the base station 101-1 is amplified by the repeater 108 and then received by the base station 101-2. In other words, there is concern about the occurrence of interference between the base stations or interference between the sectors in the uplink traffic. This problem is eliminated by using a signal (F-IOTCH, forward interference over thermal channel, refer to 3GPP2, C. S0084-001-0, Version 2.0, "Physical Layer for Ultra Mobile Broadband (UMB) Air Interface Specification", p.4-41, 2007/8 cited as the background) for controlling interference between the sectors, as with normal interference between the base stations and between the sectors through no repeater 108.

The above-mentioned method illustrated in FIGS. 4A and 4B enables the selective amplification of a signal related to a specific base station and sector in the uplink traffic and the downlink traffic.

FIG. 5A is an explanatory diagram illustrating an example of a wireless communication path in the first embodiment of this invention.

A signal transmitted by the base station 101 includes a first signal directly received by the mobile station 107, and a second signal received by the mobile station 107 via the repeater 108. This example is a downlink traffic example, and in the uplink traffic, a difference resides in that the base station 101 and the mobile station 107 illustrated in FIG. 5A are replaced with each other, and the same phenomenon as that described above occurs.

Arrival times of the first and second signals on the receiving side (the mobile station 107 in the downlink traffic, and the base station 101 in the uplink traffic) are different depending on the propagation path length of the radio signal and a processing delay within the repeater 108. In general, the first signal is first received.

FIG. 5B is a diagram for describing a receive timing difference between two types of receive signals in the first embodiment of this invention.

An example in which the first signal is received at an upper timing, and the second signal is received at a lower timing is described. In an orthogonal frequency division multiplexing (OFDM) system, respective subcarriers are multiplexed so that an OFDM symbol length becomes the integral multiple of a cycle of the subcarriers, to ensure orthogonality among the subcarriers. For that reason, a part of the second half of each OFDM symbol is allocated to a head of the OFDM symbol to prevent interference among the OFDM symbols which is caused by the delay time difference without impairing the periodicity. A loop signal allocated in this example is called "cyclic prefix (CP)".

When the receive timing difference between the first signal and the second signal is within a length of the CP as illustrated in the example of FIG. 5B, the first signal and the second signal do not interfere with each other, but receive power of the signals can be added. When being viewed from a different perspective, there is a need to simplify processing within the repeater 108 so that a difference between the receive timing of the second signal and the receive timing of the first signal due to the internal delay in the repeater 108 does not exceed the CP.

In a code division multiple access (CDMA) system, receivers that are in synchronism with the respective receive timings of the first signal and the second signal are prepared for the first signal and the second signal, and a delay time between those signals are uniformed and synthesized, thereby enabling the two signals to be synthetically received. This method is called "RAKE reception".

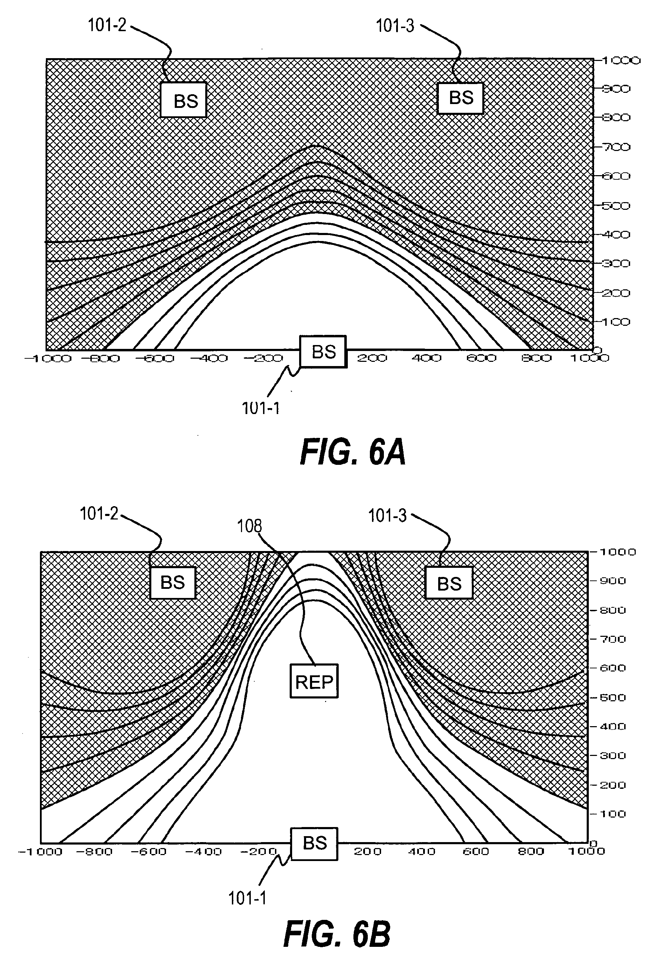

FIGS. 6A and 6B are explanatory diagrams illustrating the advantages obtained by the first embodiment of this invention. More specifically, FIGS. 6A and 6B are simulation results showing that coverage area of the base station increases due to installation of the repeater.

FIG. 6A illustrates the DUR when the base stations 101-1, 101-2, and 101-3 are arranged at substantially regular distances as illustrated in FIG. 6A, and the base station 101-1 is a desired base station. A light color is equal to or higher than 0 dB in DUR, and a dark color is lower than 0 dB in DUR. FIG. 6A illustrates plane coordinates (in meters) in which the axis of ordinate and the axis of abscissa are the mobile station positions and the base station positions, respectively.

In an example of FIG. 6B, the repeater 108 is installed as illustrated in FIG. 6B, the directional gain of the repeater 108 to the base stations is 0 dB with respect to the base station 101-1, and -20 dB with respect to the base stations 101-2 and 101-3. The directional gain of the repeater 108 to the mobile stations is 0 dB in all directions. Further, an upper limit of power amplification by the repeater 108 is identical with that of the base stations. The format of FIG. 6B is identical with that of FIG. 6A.

It is understood from comparison of FIG. 6A with FIG. 6B that coverage area of the desired base station 101-1 is increased by installation of the repeater 108.

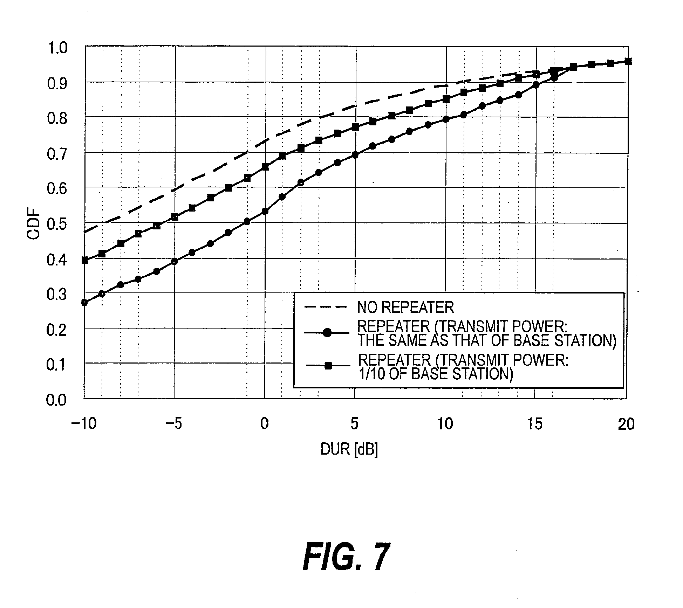

FIG. 7 is an explanatory diagram illustrating an example of quantitative evaluation results of the increase in the coverage area in the first embodiment of this invention.

FIG. 7 illustrates the cumulative density function (CDF) of the DUR in three cases where (1) there is no repeater, (2) a repeater is installed, and the upper limit of the power amplification is identical with that of the base stations, and (3) a repeater is installed, and the upper limit of the power amplification is 1/10 of that of the base stations. When an area rate (to an area of 1,000 [m] x 2,000 [m] of FIGS. 6A and 6B) in which DUR = 0 [dB] can be achieved is compared with each other, it is found from the graph that (1) is about 25%, (2) is about 45%, and (3) is about 35%. In other words, coverage area of the desired base station can be enlarged by installation of the repeater 108.

With the above-mentioned description, the problems on the radio communication system and the effect of eliminating the problems according to this invention have been confirmed. A method of realizing this invention is described below.

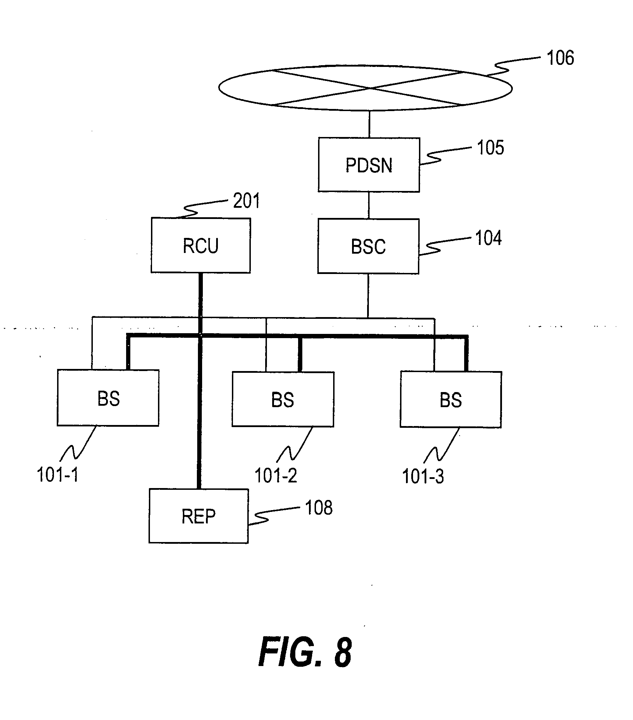

FIG. 8 is an explanatory diagram illustrating a network configuration according to the first embodiment of this invention.

The base stations 101-1, 101-2, and 101-3 exchange data with another base station or another communication system via the base station control unit 104 and the packet data serving node (PDSN) 105. The base stations 101-1, 101-2, and 101-3 exchange data with another communication system over the IP network 106. A route communicating traffic data is indicated by thin lines in FIG. 8.

A repeater control unit (RCU) 201 collects information necessary to control the repeater 108 from the base stations 101-1, 101-2, and 101-3, and exchanges information for controlling the repeater with the repeater 108. A route used for controlling the repeater 108 is indicated by thick lines in FIG. 8.

The repeater control unit 201 can be arranged anywhere as long as a wired or wireless communication path to the base stations 101-1, 101-2, 101-3, and the repeater 108 can be ensured. For example, the repeater control unit 201 may be located in the base station 101-1, 101-2, or 101-3, or the base station control unit 104, or may be located in the repeater 108. Alternatively, the repeater control unit 201 may be located at another place independently. In any cases, the advantages of this invention are not affected.

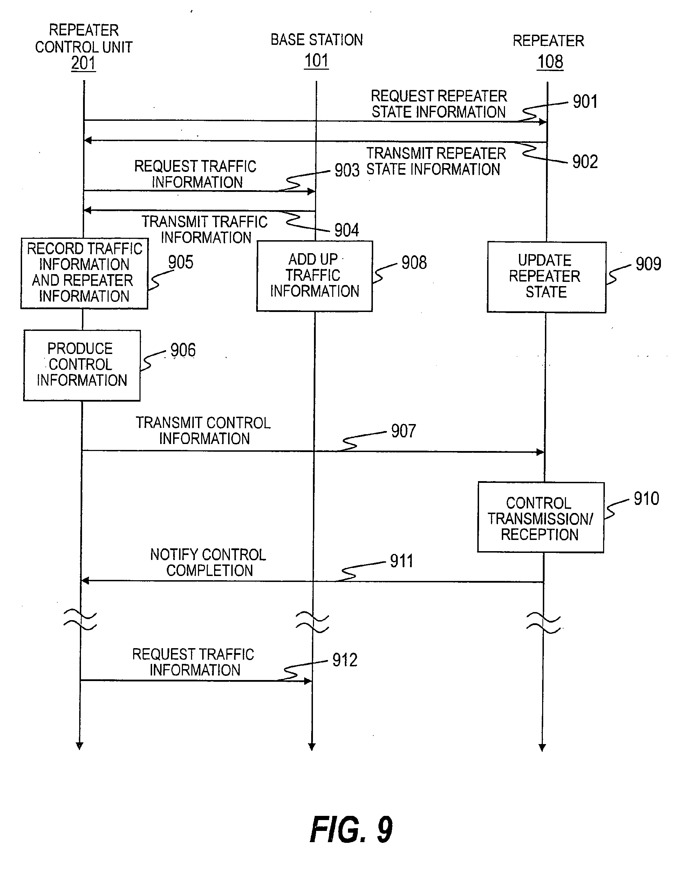

FIG. 9 is an explanatory diagram illustrating a control sequence according to the first embodiment of this invention.

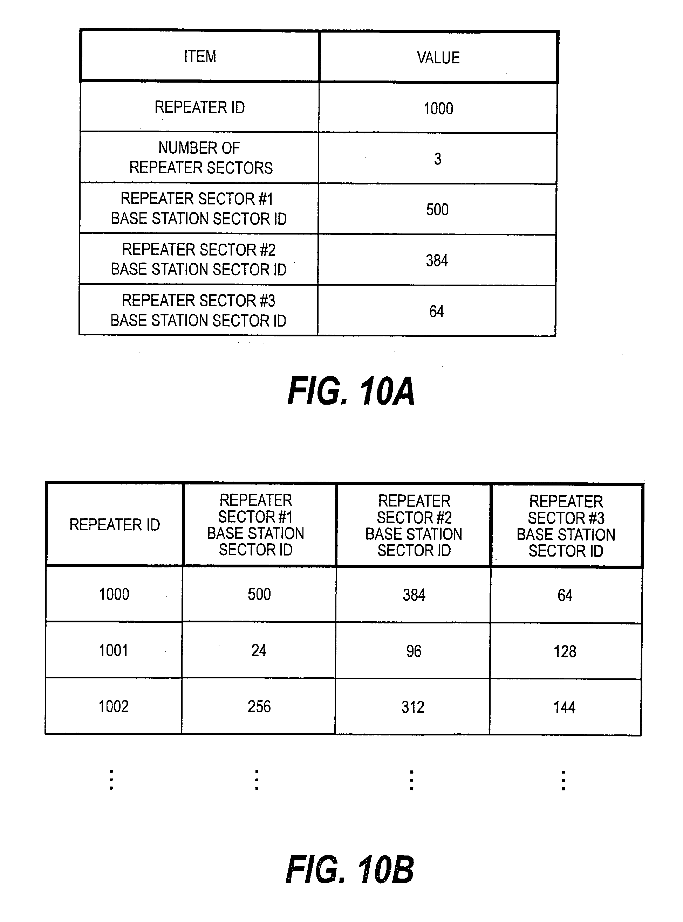

First, the repeater control unit 201 requests a report on a repeater state from the repeater 108 (Step 901). The repeater 108 that has received the request transmits the repeater state information to the repeater control unit 201 (Step 902). More specifically, the repeater state information includes an identifier (ID) unique to the repeater, the number of repeater sectors, and an ID of the base station sector which is most strongly received by the respective repeater sectors. A format example of the repeater state information to be transmitted is illustrated in FIG. 10A. The reported results are recorded in a format illustrated in FIG. 10B (Step 905).

The repeater sector is a sector realized by the directional beams 110 and 111 from the repeater 108. In the following description, the repeater sector is also referred to as "repeater sector 110" or "repeater sector 111 ".

The repeater sector includes a repeater sector on a base station side in use for a communication between the repeater 108 and the base station 101, and a repeater sector on a mobile station side in use for a communication between the repeater 108 and the mobile station 107. In the example of FIGS. 4A and 4B, the repeater sector on the base station side is realized by the directional beam 110, and the repeater sector on the mobile station side is realized by the directional beam 111.

On the other hand, the section provided by the base station 101 is referred to as "base station sector 103 (for example, the base station sector 103-1 of FIG. 4A).

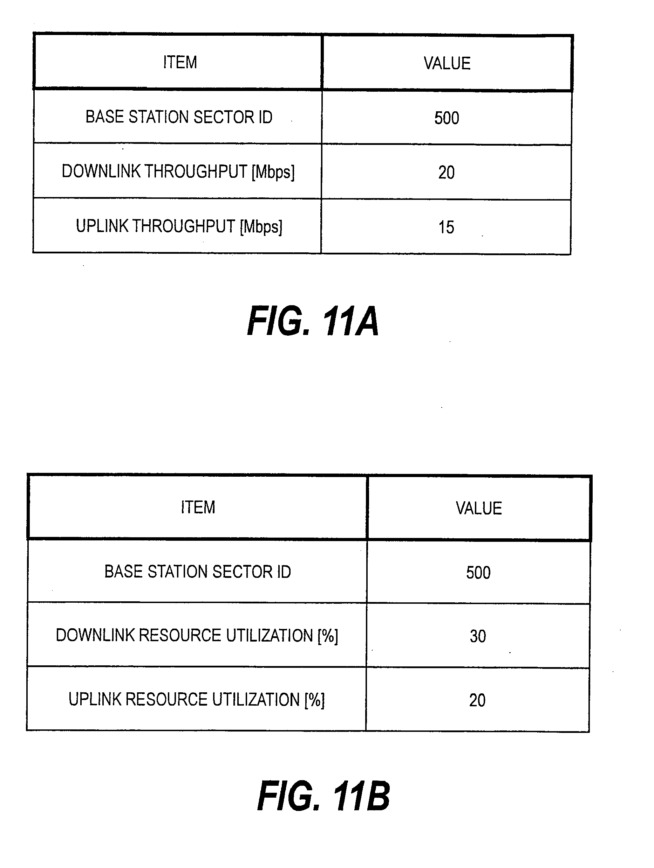

Further, the repeater control unit 201 requests the transmission of traffic information from the base station 101 (Step 903). The base station 101 that has received the request transmits the traffic information to the repeater control unit 201 (Step 904). More specifically, the traffic information includes an ID unique to the sector, and the total throughput of the sector or the operating rate of the sector (that is, the utilization of the resource). A format example of the traffic information to be transmitted is illustrated in FIGS. 11A and 11B.

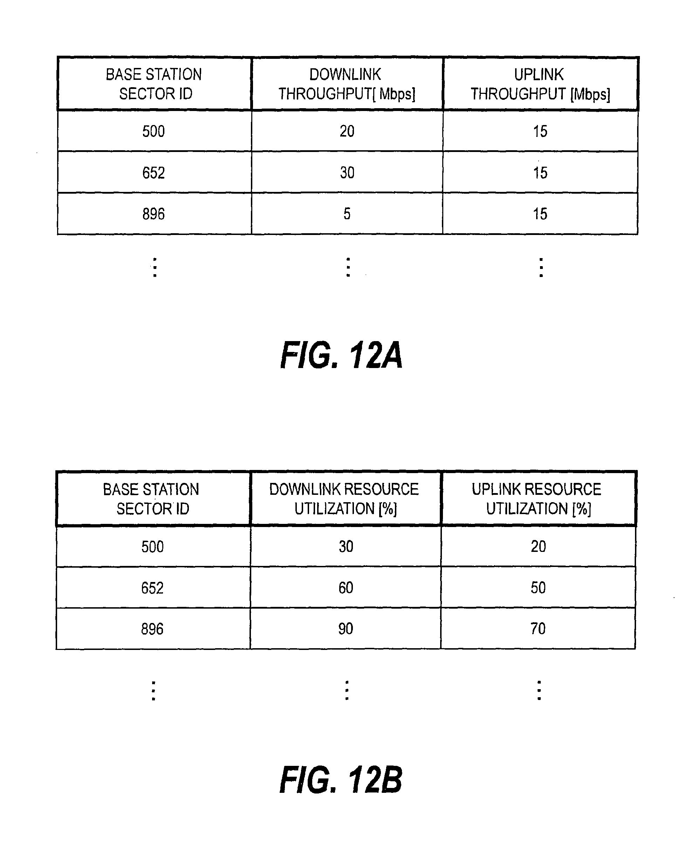

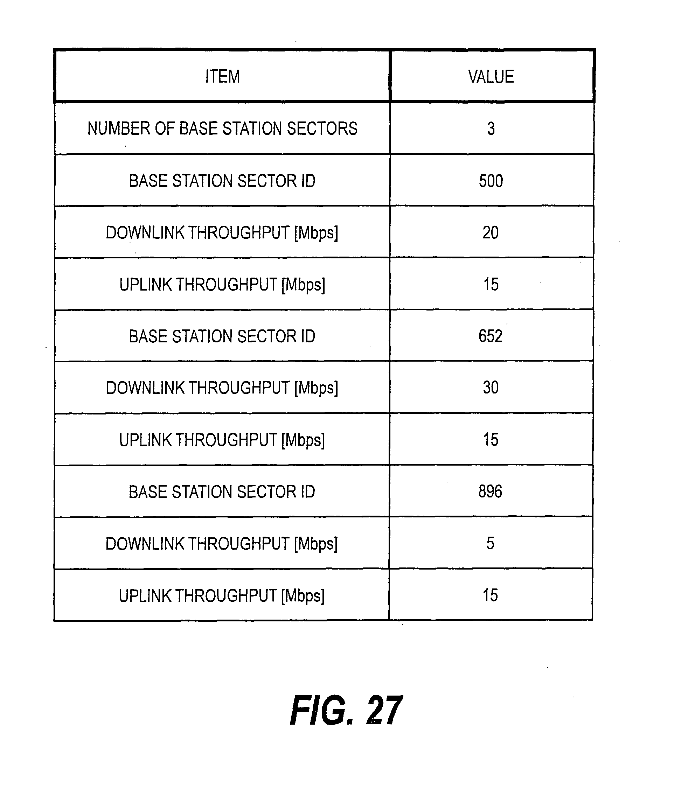

When managing a plurality of sectors, the base station 101 transmits the traffic information for each sector. For decision of the data size to be reported, the number of sectors may be inserted before the field of the sector ID. A format example of the traffic information when the number of sectors is inserted before the field of the sector ID is illustrated in FIG. 27. The repeater control unit 201 records the traffic information reported by a format illustrated in FIG. 11A or 11B in a format of FIG. 12A or 12B (Step 905).

The repeater control unit 201 produces control information to be transmitted to the respective repeaters based on the traffic information of the respective base stations and the state information of the respective repeaters which have been recorded in the above-mentioned steps (Step 906), and transmits the control information to the respective repeaters (Step 907).

After transmitting the traffic information to the repeater control unit 201, the base station 101 adds up the traffic information in background that executes data communication (Step 908). More specifically, information for updating the sector throughput or the resource utilization is collected.

After transmitting the state information to the repeater control unit 201, the repeater 108 executes processing of updating the state (Step 909). More specifically, the repeater 108 updates the ID of the base station sector which is most strongly received by the respective repeater sectors.

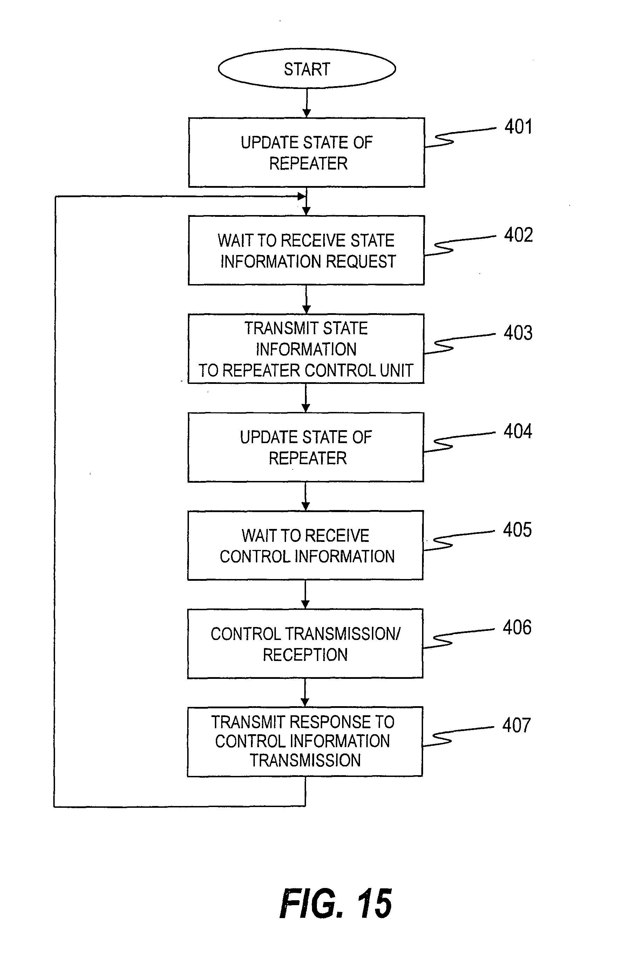

Upon receiving the control information transmitted in Step 907, the repeater 108 controls transmission and reception according to the control information (Step 910). The details of the control are described later (refer to Step 407, etc. of FIG. 15).

Subsequently, the repeater 108 transmits a notification indicating that the control has been completed to the repeater control unit 201 (Step 911).

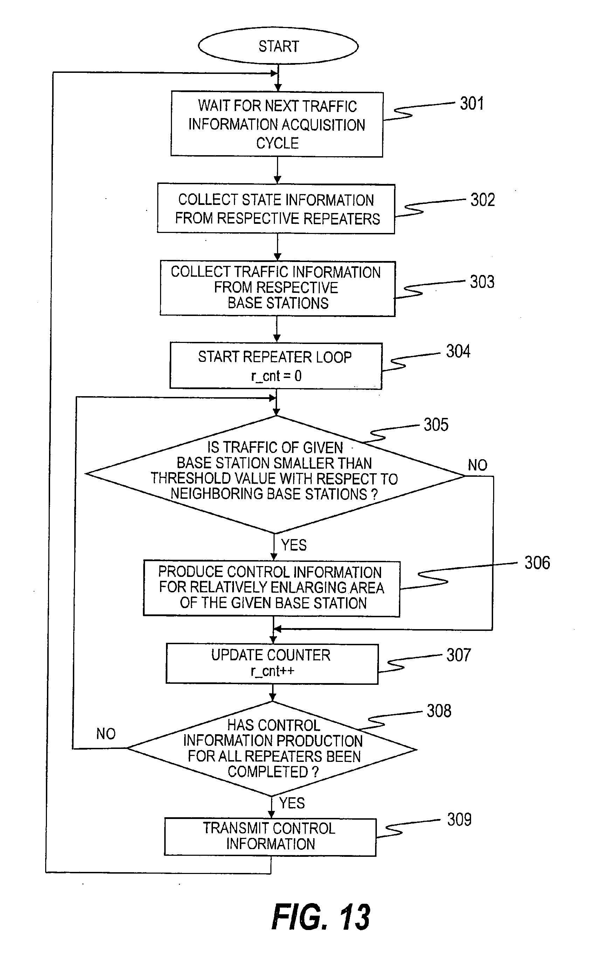

After receiving the notification transmitted in Step 911, the repeater control unit 201 again transmits the traffic information request at given timing (for example, after a standby time has elapsed in Step 301 of FIG. 13 which is described later) (Step 912). This step is identical with Step 903 that has been already described. Thereafter, the same processing as that of Steps 904 to 911 is repeated.

FIG. 10A is an explanatory diagram illustrating an example of the format of the repeater state information transmitted in the first embodiment of this invention.

FIG. 10A illustrates an example of a format of the repeater state information transmitted from a repeater 108 which is identified by the repeater ID "1000". The repeater information includes the number "3" of repeater sectors provided by the repeater 108 which is identified by the repeater ID "1000", and IDs "500", "384", and "64" of the base station sectors which are most strongly received by the respective repeater sectors.

FIG. 27 is an explanatory diagram illustrating another example of the format of the repeater state information transmitted in the first embodiment of this invention.

More specifically, FIG. 27 illustrates an example of a format in which the number of sectors is inserted before a field of the sector ID. As in the example of FIG. 10A, when the number of sectors is thus inserted, the repeater control unit being a receiving side of that information can calculate a data volume subsequent to the number of sectors. Therefore, this invention can be realized even by a system in which the base stations having a plurality of kinds of sectors are mixed.

FIG. 10B is an explanatory diagram illustrating an example of a format of the repeater state information recorded in the first embodiment of this invention.

As illustrated in FIG. 10B, the repeater ID for identifying the repeater 108 that has transmitted the repeater state information, and the IDs of the base station sectors included in the repeater state information are recorded in association with each other.

For example, when the repeater control unit 201 receives the repeater state information illustrated in FIG. 10A, the repeater ID "1000" included in the repeater state information and the IDs "500", "384", and "64" of the base station sectors which are most strongly received in the respective repeater sectors are recorded in association with each other.

Likewise, when the repeater control unit 201 receives the repeater state information from another repeater (for example, a repeater identified by a repeater ID "1001", or a repeater identified by a repeater ID "1002"), the contents of the received repeater state information are recorded.

FIG. 11A is an explanatory diagram illustrating a first example of a format of the traffic information transmitted in the first embodiment of this invention.

More specifically, FIG. 11A illustrates an example in which throughput is transmitted as the traffic information. In the example of FIG. 11A, a downlink throughput and an uplink throughput which have been measured in the base station sector identified by the base station sector ID "500" are "20" (Mbps) and "15" (Mbps), respectively.

FIG. 11B is an explanatory diagram illustrating a second example of the format of the traffic information transmitted in the first embodiment of this invention.

More specifically, FIG. 11B illustrates an example in which the resource utilization is transmitted as the traffic information. In the example of FIG. 11B, the downlink resource utilization and the uplink resource utilization which have been measured in the base station sector identified by the base station sector ID "500" are "30"(%) and "20"(%), respectively.

FIG. 12A is an explanatory diagram illustrating a first example of a format of the traffic information recorded in the first embodiment of this invention.

As illustrated in FIG. 12A, the base station sector ID for identifying the base station sector of the base station 101 that has transmitted the traffic information, and the traffic information measured in the base station sector are recorded in association with each other.

FIG. 12A illustrates an example in which the throughput is transmitted as the traffic information. For example, when the repeater control unit 201 receives the traffic information illustrated in FIG. 11A, the base station sector ID "500" included in the received information, and the downlink throughput "20" (Mbps) and the uplink throughput "15" (Mbps) which have been measured in the base station sector identified by that ID are recorded in association with each other.

Likewise, when the repeater control unit 201 receives the traffic information measured in another base station sector (for example, the base station sector identified by the base station sector ID "652", or the base station sector identified by the base station sector ID "896"), the contents of the received traffic information are recorded.

FIG. 12B is an explanatory diagram illustrating a second example of the format of the traffic information recorded in the first embodiment of this invention.

FIG. 12B illustrates an example in which not the throughput but the resource utilization is transmitted as the traffic information. Other matters in FIG. 12B are identical with those in FIG. 12A. For example, when the repeater control unit 201 receives the traffic information illustrated in FIG. 11B, the base station sector ID "500" included in the received information, and the downlink resource utilization "30"(%) and the uplink resource utilization "20"(%) which have been measured in the base station sector identified by the ID are recorded in association with each other.

FIG. 13 is a flowchart illustrating an operation of the repeater control unit according to the first embodiment of this invention.

The repeater control unit 201 waits until a clock counter within the repeater control unit reaches a constant value because the repeater control unit 201 operates in a given cycle (Step 301). The above-mentioned given cycle can be arbitrarily set, but typically follows a macro traffic variation, and therefore it is conceivable that a cycle of about 1 minute to 1 hour is appropriate.

In Step 302, the repeater control unit 201 requests state information transmission from the respective repeaters 108, collects the state information from the respective repeaters 108, and records the collected state information in the repeater control unit 201. In this stage, the ID of the base station sector which is affected by a change in coverage area by controlling the repeater 108 is specified as illustrated in FIG. 10B.

In Step 303, the repeater control unit 201 requests traffic information transmission from the respective base stations 101, collects the traffic information from the respective base stations 101, and records the collected traffic information in the repeater control unit 201. The traffic information may be collected from all of the base stations 101 within the system. However, the data volume to be collected is huge, and thus the repeater control unit 201 may request the traffic information transmission from only the base station that manages the base station sector ID having the repeater state information recorded therein based on the repeater state information (FIG. 10B) collected in Step 302.

In Step 304, the repeater control unit 201 initializes the repeater counter because the repeater control unit 201 controls all of the repeaters 108.

In Step 305, the repeater control unit 201 compares traffic among a plurality of base station sectors recorded in the repeater state information for each repeater. An example of an evaluation index is represented by the following formula.

[Formula. 1]

$$E(r,S) = \frac{Tr(r,S)}{\dfrac{1}{N_s-1}\displaystyle\sum_{x=1,x\neq S}^{N_s} Tr(r,x)} \quad \cdots (1)$$

In the numerical formula (1), reference r is an index of the repeater, S is an index of the repeater sector being a target, Tr(r, x) is a traffic amount of a repeater sector x of a repeater r (refer to FIGS. 12A and 12B), and Ns is the number of repeater sectors in the repeater r.

Calculated through the numerical formula (1) is a ratio of the traffic of the base station sector which is most strongly received by the repeater sector S of the repeater r to the traffic average of the base station sectors that are most strongly received by the repeater sectors other than the repeater sector S of the repeater r, respectively. In other words, a value calculated by the numerical formula (1) is an index indicating how larger or smaller the traffic of the base station sector which is most strongly received by the repeater sector S is than the traffics of other base station sectors around the repeater.

In Step 305, the repeater control unit 201 determines whether or not a value calculated by the numerical formula (1) is larger than a given threshold value (arbitrary value of 0 to 1).

When the value calculated by the numerical formula (1) is smaller than the threshold value (that is, when determination is yes in Step 305 of FIG. 13), the traffic of the base station sector which is most strongly received by the repeater sector S is relatively small as compared with the traffics of the base station sectors that are most strongly received by other repeater sectors. In this case, the repeater control unit 201 produces control information for the repeater 108 so as to increase the output of the repeater sector in order to increase the accommodation traffic of the subject base station sector (Step 306).

Increasing the output of that repeater sector is realized by amplifying a signal from the base station sector which has been received by the repeater sector to thereby enlarge an area to be transmitted. As a result, coverage area of the base station sector whose traffic is determined to be relatively small is enlarged by means of the repeater whose transmission area is enlarged, thereby eliminating.the imbalance of the traffics.

Then, in Step 307, the repeater control unit 201 adds 1 to the repeater counter in order to process a subsequent repeater because processing has been completed for one repeater.

When the value calculated through the numerical formula (1) is equal to or larger than the threshold value, the repeater control unit 201 executes Step 307 without execution of Step 306.

In Step 308, the repeater control unit 201 determines whether or not processing for all the repeaters 108 has been completed. If processing has not been completed, the repeater control unit 201 returns to Step 305 to execute processing for the subsequent repeater. If processing has been completed, the repeater control unit 201 transmits the control information to the respective repeaters 108 in Step 309.

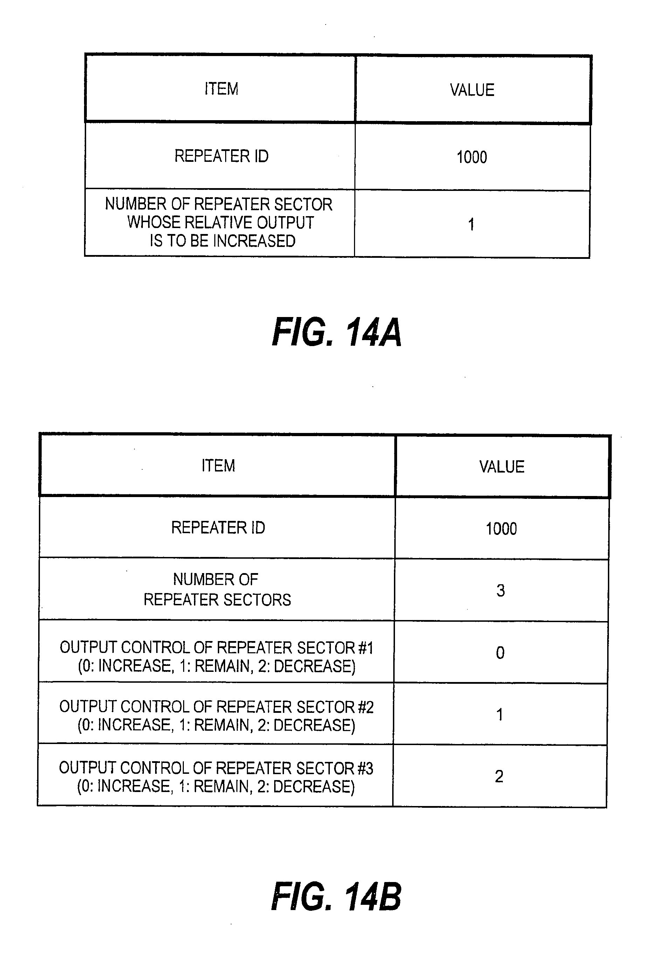

FIGS. 14A and 14B are explanatory diagrams illustrating an example of a format of the control information transmitted to the repeater 108 according to the first embodiment of this invention.

FIG. 14A illustrates a format for notifying an ID unique to the repeater and a number of the repeater sector whose output is to be increased. The repeater sector whose coverage area is to be enlarged is a repeater sector having the lowest evaluation index calculated in Step 305 of FIG. 13. In order to enlarge coverage area of the repeater sector, there is a need to increase the output of the repeater sector.

In the example of FIG. 14A, a repeater sector identified by a number "1" of the repeater 108 identified by the repeater ID "1000" (hereinafter referred to as "repeater sector #1" is notified as the repeater sector whose output is to be increased.

For example, in Step 305 of FIG. 13, it is assumed to determine that the traffic of the base station sector identified by the base station sector ID "500" is smaller than the threshold value. The repeater sector that receives a signal from that base station sector is the repeater sector #1 of the repeater 108 identified by the repeater ID "1000" (refer to FIGS. 10A and 10B). In this case, the repeater sector #1 is notified as the repeater sector whose output is to be increased, as illustrated in FIG. 14A.

FIG. 14B illustrates a format for notifying an ID unique to the repeater, the number of repeater sectors for determining the number of data pieces of the control information, and the output control (increased output, maintained output, decreased output) for each repeater sector. For example, when the evaluation index calculated in Step 305 of FIG. 13 is larger than 1.5, the determination is the output decreased. When the evaluation index is from 0.5 to 1.5, the determination is output maintained. When the evaluation index is lower than 0.5, the determination is the output increased. The output decreased does not aim at always achieving the output decreased, but means that the output may be decreased. Specifically, when the output is not increased in other repeater sectors, there is no need to decrease the output of the subject repeater sector (that is, the repeater sector whose output is determined to be decreased) (however, the output may be decreased). However, when the output is increased in other repeater sectors, the output of the subject repeater sector is decreased with the highest priority.

In the example of FIG. 14B, the repeater 108 identified by the repeater ID "1000" has three repeater sectors. Among those repeater sectors, the repeater sector #1 is determined as the output increased, and the repeater sector #2 is determined as the output maintained. In other words, the output of the repeater sector #1 is increased, and the output of the repeater sector #2 is maintained. On the other hand, the repeater sector #3 is determined as the output decreased. In this example, another repeater sector (that is, the repeater sector #1) is determined as the output increased. When there is a need to decrease the output of the repeater sector #3 in order to enlarge the output range of the repeater sector #1, the output of the repeater sector #3 is decreased with the highest priority (with priority higher than the repeater sector #2 whose output is determined to be maintained), but if unnecessary, the output of the repeater sector #3 may not be decreased.

As in the example of FIG. 14A, in Step 305 of FIG. 13, when the traffic of the base station sector identified by the base station sector ID "500" is determined to be smaller than the threshold value, it is notified that the output of the repeater sector #1 is to be increased.

Processing for actually increasing or decreasing the output of the repeater sector based on the above-mentioned control information is executed in Step 406 of FIG. 15 which is described later.

FIG. 15 is a flowchart illustrating an operation of the repeater 108 according to the first embodiment of this invention.

First, the repeater 108 updates the state of the repeater 108 in Step 401 immediately after its activation. More specifically, the repeater 108 specifies the signal of the base station sector which is most strongly received by the respective repeater sectors, and determines the base station sector ID for each of the repeater sectors.

In Step 402, the repeater 108 waits to receive the state information transmission request from the repeater control unit 201.

In Step 403, the repeater 108 transmits the results of the state update executed in Step 401 or Step 404 (to be described later) in the previous loop to the repeater control unit 201 according to the format of FIG. 10A.

Step 404 is the same processing as that of Step 401.

In Step 405, the repeater 108 waits to receive the control information transmitted from the repeater control unit 201.

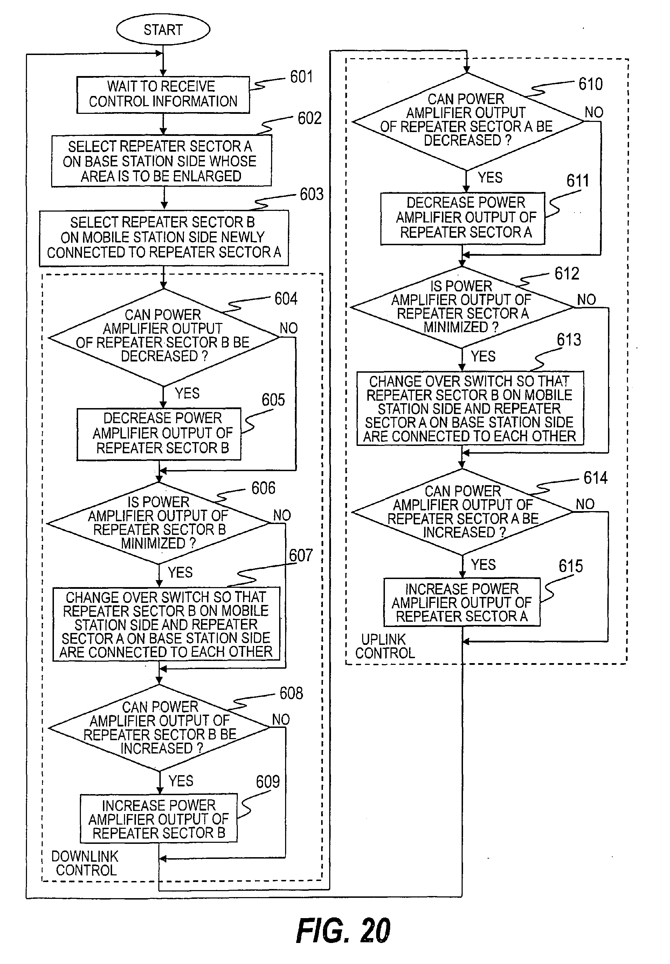

In Step 406, the repeater 108 controls the input and output of the repeater 108 based on the control information illustrated in FIGS. 14A and 14B transmitted from the repeater control unit 201. The details of the control are described later (refer to FIG. 20).

In Step 407, the repeater 108 notifies the repeater control unit 201 that processing of Step 406 has been completed.

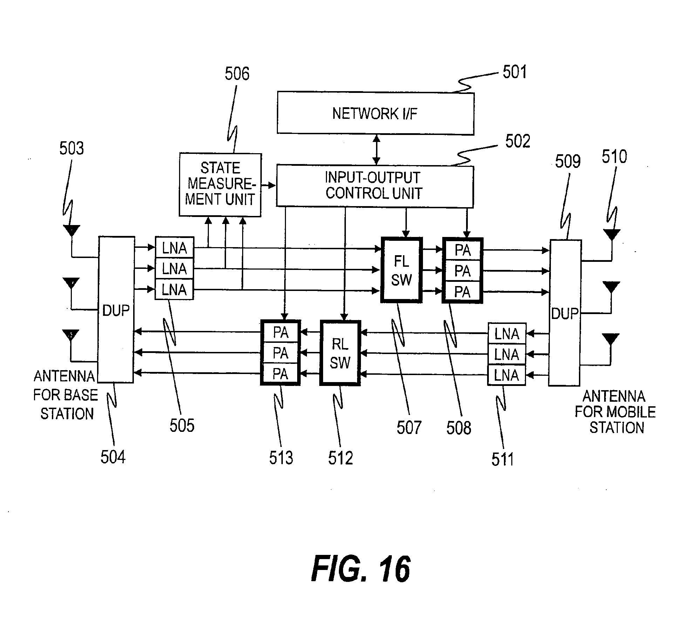

FIG. 16 is a block diagram illustrating a device configuration of the repeater 108 according to the first embodiment of this invention.

A network I/F 501 is an interface for communicating the control information with the repeater control unit 201, and is realized by a wired or wireless interface device.

An input-output control unit 502 has a function of exchanging a control message with the repeater control unit 201, and a function of controlling the input/output of the repeater 108 based on the control information from the repeater control unit 201. For control of the input/output, the input-output control unit 502 controls a downlink switch 507, a downlink power amplifier 508, an uplink switch 512, and an uplink power amplifier 513. The input-output control unit 502 can be realized by a CPU or a DSP because the input-output control unit 502 is an arithmetic unit.

An antenna for base station 503 is an antenna for performing uplink and downlink radio communications with the base station 101, and at least one antenna is disposed for each of the repeater sectors. A plurality of the antennas are equipped for each repeater sector, thereby enabling multi-antenna communication within the repeater sector.

Duplexers 504 and 509 each have a function of distributing an uplink radio signal and a downlink radio signal by a filter in order that the antenna is shared between the uplink traffic and the downlink traffic.

Low noise amplifiers 505 and 511 are amplifiers used in an initial stage of the receiving side on which applied noises are small.

A state measurement unit 506 has a function of executing cell search for searching a base station sector which is most strongly received for each of the repeater sectors in baseband processing. More specifically, the state measurement unit 506 includes an A/D converter and a logic circuit or arithmetic unit (CPU or DSP) which executes synchronization and cell search.

The downlink switch 507 is made up of a switch and a multiplexer, changes over a connection between the receiving sector on the base station side and the transmitting sector on the mobile station side, and synthesizes the switch output. The switch is controlled by the input-output control unit 502.

The power amplifiers 508 and 513 each have a function of amplifying a transmit signal. The input-output control unit 502 controls the power amplifier 508 to control the transmit power for each of the sectors.

An antenna for mobile station 510 is an antenna for implementing the uplink and downlink radio communications with the mobile station 107, and the antenna is disposed for each of the repeater sectors. A plurality of the antennas are disposed for each of the repeater sectors, thereby enabling multi-antenna communication within the repeater sector.

The uplink switch 512 is made up of a switch and a multiplexer, changes over a connection between the receiving sector on the mobile station side and the transmitting sector on the base station side, and synthesizes the switch output. The configuration of the uplink switch 512 is identical with that of the downlink switch 507, and controlled by the input-output control unit 502.

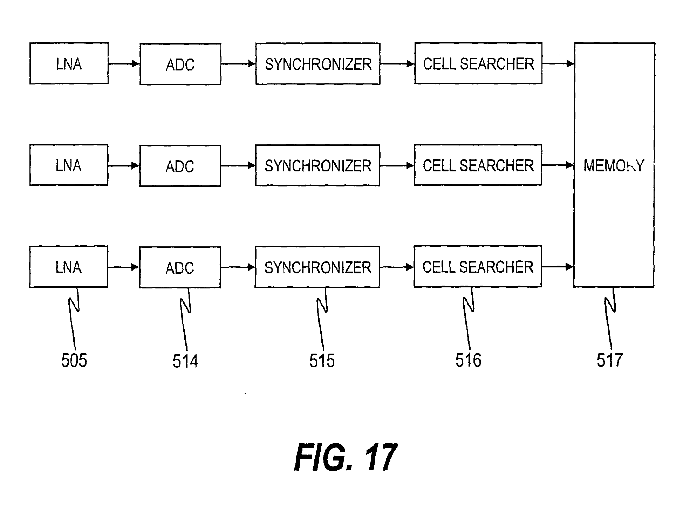

FIG. 17 is a diagram illustrating a configuration of the state measurement unit 506 according to the first embodiment of this invention.

The state measurement unit 506 executes analog-digital conversion by each ADC 514 in response to the output of the low noise amplifier 505 for each of the repeater sectors according to the downlink receive signal from the base station 101. Thereafter, the state measurement unit 506 executes frame synchronization processing using a matched filter in a synchronizer 515, and then inputs a receive signal establishing frame synchronization to a cell searcher 516.

In the case of a CDMA receiver, the cell searcher 516 executes correlation calculation by means of the matched filter while changing a sector specific spreading code of the base station, and records the ID of the base station sector having the largest calculated value in a memory 517. In the case of an OFDM receiver, the cell searcher 516 converts the receive signal into a frequency domain by FFT calculation. The cell searcher 516 reads the base station sector specific ID from a broadcast signal which is transmitted from the base station 101 into the base station sector, and records the read ID in the memory 517. The above-mentioned matched filter and FFT calculation can be realized by a logic circuit, a CPU, a DSP, or the like.

When recording in the memory 517, the base station sector ID is recorded for each of the repeater sectors, for example, as illustrated in FIG. 10B.

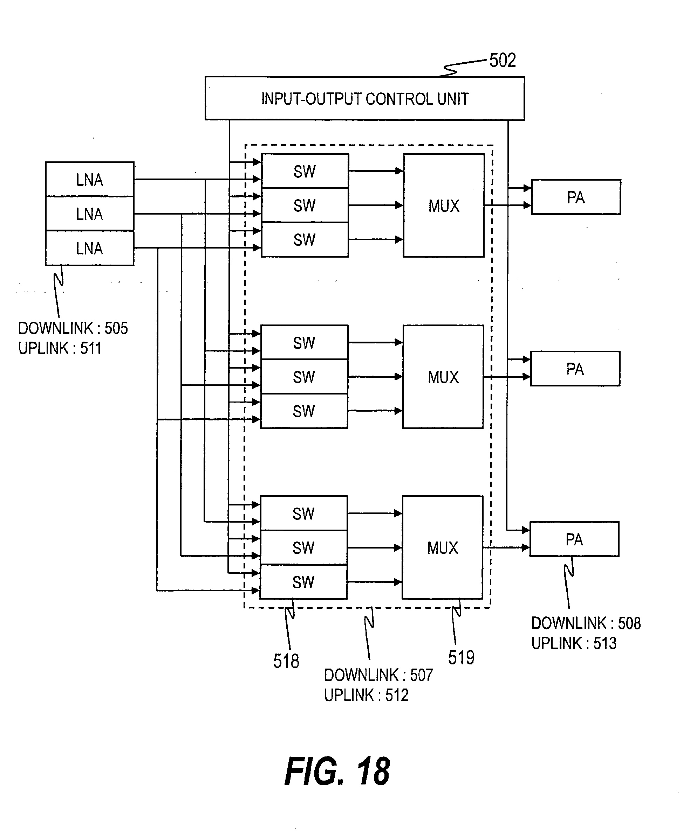

FIG. 18 is an explanatory diagram illustrating a configuration of a switch periphery inside of the repeater 108 according to the first embodiment of this invention.

More specifically, FIG. 18 illustrates a configuration of the periphery of the downlink switch 507 and the uplink switch 512.

The output of the low noise amplifier 505 or 511 is a receive signal of each repeater sector.

Switches 518 each change over a connection between the receiving side repeater sector and the transmitting side repeater sector. More specifically, each switch 518 controls passing or blocking of a signal communicated between each receiving side repeater sector and each transmitting side repeater sector. Each of the switches 518 is in any one of "on" state and an "off" state. The switch 518 being in the "on" state allows the signal to pass therethrough, but the switch 518 being in the "off" state blocks the signal.

Multiplexers 519 each synthesize the outputs of the plurality of switches 518. The output of each multiplexer 519 corresponds to the output of the transmitting side repeater sector, and is transmitted from the transmission antenna of each repeater sector through the power amplifier 508 or 513 for each repeater sector.

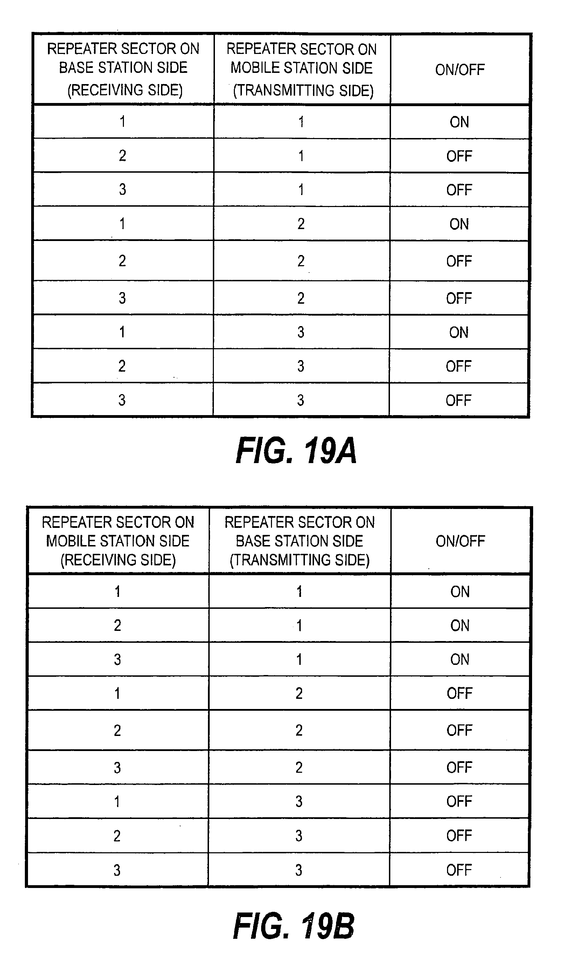

FIGS. 19A and 19B are tables illustrating a changeover example of the switches 518 in the repeater 108 according to the first embodiment of this invention.

In the example illustrated in FIGS. 4A and 4B, an example in which the downlink traffic is conducted is illustrated in FIG. 19A, and an example in which the uplink traffic is conducted is illustrated in FIG. 19B.

In the case of the downlink traffic, the number of receive signals (corresponding to the base station transmit signal) to be amplified and output among the receive signals in the plurality of repeater sectors is one. For that reason, as illustrated in FIG. 19A, switches related to unnecessary receive repeaters are turned off. The switches are controlled as illustrated in FIG. 19A so that the repeater 108 distributes the signal received by the repeater sector #1 on the receiving side (that is, base station side) to all of the repeater sectors on the transmitting side (that is, mobile station side), thereby enabling the signal to be transmitted in all directions.

In the case of the uplink traffic, the switches are controlled as illustrated in FIG. 19B so that the repeater 108 synthesizes the signals received by all the repeater sectors on the receiving side (that is, mobile station side) by means of the multiplexers, and transmits the synthesized signal from the repeater sector #1 on the transmitting side (that is, base station side). As a result, it is possible to prevent unnecessary interference radiation to the base stations located in the orientations of the transmitting side repeater sectors #2 and #3.

A method of connecting the switches and a method of controlling the power amplifier output for both of the uplink traffic and the downlink traffic is described below. A main difference between the uplink traffic and the downlink traffic is that, in the former, one sector on the base station side being the output side may be connected with a plurality of sectors on the mobile station side being the input side, whereas, in the latter, one sector B on the mobile station side the output side is connected with only one sector on the base station side being the input side. In other words, the number of connections of input with respect to output may be plural in the uplink traffic whereas the number thereof is only one in the downlink traffic.

FIG. 20 is a flowchart illustrating repeater input/output control according to the first embodiment of this invention.

First, in Step 601, the input-output control unit 502 waits to receive the control information from the repeater control unit 201.

Subsequently, in Step 602, the input-output control unit 502 selects a repeater sector A on the base station side whose coverage area is to be enlarged from the received control information according to the format illustrated in FIGS. 14A or 14B. In the example of FIG. 14A, the repeater sector identified by the number indicated in the control information is selected as the repeater sector A as it is. In the example of FIG. 14B, the repeater sector identified by the number of the sector for which the output increased is defined is selected as the repeater sector A.

For example, when the repeater sector #1 is selected as the repeater sector A as illustrated in FIG. 14A, coverage area of the base station sector (base station sector identified by ID "500" in the example of FIG. 10A) which is most strongly received by the repeater sector #1 is enlarged. More specifically, in the downlink traffic, a domain in which the signal received by the repeater sector #1 from the base station sector is amplified and transmitted by the repeater 108 is enlarged. More specifically, the switch 507 within the repeater changes over so as to thus enlarge the transmission domain (Steps 604 to 609). Further, the switch 512 within the repeater 108 changes over so as to realize the uplink traffic symmetric to the above-mentioned downlink traffic (Steps 610 to 615).

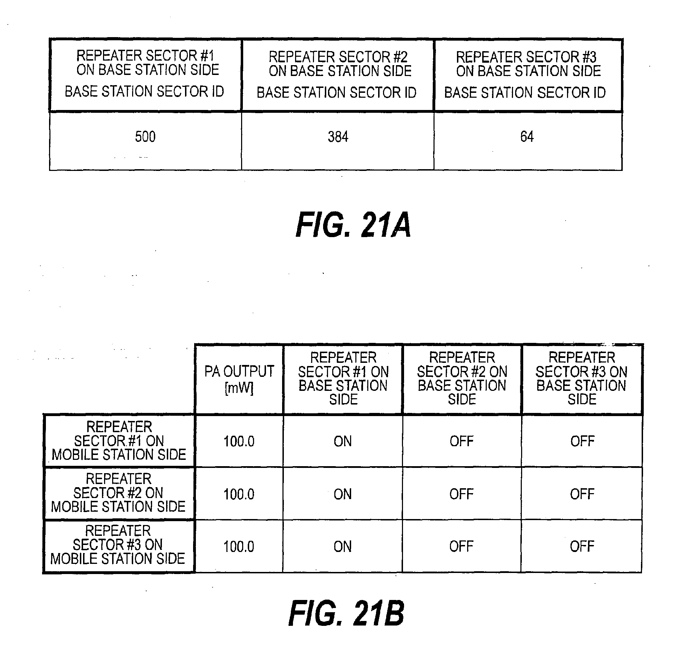

In Step 603, the input-output control unit 502 selects a repeater sector B on the mobile station side which is newly connected to the repeater sector A determined in Step 602. The selecting method is described later with reference to FIGS. 21A to 21D.

In Steps 604 to 609, the input-output control unit 502 controls the downlink traffic. With regard to the input-output control unit 502 according to this embodiment, the input is the repeater sector on the base station side whereas the output is the repeater sector on the mobile station side.

In Step 604, the input-output control unit 502 determines whether or not the power amplifier output of the above-mentioned repeater sector B can be decreased. More specifically, when the following two conditions are met, it is determined that the output can be decreased.

(a) The power amplifier output is larger than a minimum value.

(b) The repeater sector B is not connected with the repeater sector A.

When the result in Step 604 is yes (that is, when the power amplifier output can be decreased), the input-output control unit 502 decreases the power amplifier output of the repeater sector B in Step 605. In this situation, when the power amplifier output is decreased from the maximum value to the minimum value at once, though the input-output control unit 502 does not fail as the system, the mobile station connected to the base station with the aid of the repeater suddenly loses the base station being the connection destination. This induces the fear that the line is disconnected. In other words, the quality of the service is deteriorated, and hence it is not preferable to decrease the output at once as described above. Conversely, it is desirable that the output be gradually decreased (for example, 1 dB per one second) to naturally effect the hand-off of the mobile station in this embodiment.

When the result in Step 604 is no, the input-output control unit 502 does not execute Step 605.

In Step 606, the input-output control unit 502 determines whether or not there is room to decrease the output of the repeater sector B. The determination contents per se are identical with those in Step 604, but a difference from Step 604 resides in that the result in Step 605 is reflected. More specifically, when the power amplifier output of the repeater sector B is the minimum, it is determined that there is no room to further decrease the output of the repeater sector B.

When it is determined that there is no room to decrease the output of the repeater sector B in Step 606, the input-output control unit 502 changes over the switch 507 input to the repeater sector B so as to connect only to the repeater sector A in Step 607.

When it is determined that there is room to decrease the output of the repeater sector B in Step 606, the input-output control unit 502 does not execute processing of Step 607.

In Step 608, the input-output control unit 502 determines whether or not the output of the power amplifier 508 in the repeater sector B can be increased. More specifically, when the following two conditions are met, it is determined that the output can be increased.

(c) The power amplifier output is smaller than a maximum value.

(d) The repeater sector B is being connected with the repeater sector A.

When the result in Step 608 is yes, the input-output control unit 502 increases the output of the power amplifier 508 in the repeater sector B in Step 609. In this situation, when the power amplifier output is increased from the minimum value to the maximum value at once, the interference appears to rapidly increase in relation to the mobile stations around the repeater apparatus. Therefore, there is a risk that no communication is made until the mobile stations are adjusted to the rapidly increased interference, which is not preferable. As in Step 605, it is desirable that the output be gradually increased (for example, 1 dB per one second) to naturally effect the hand-off of the mobile station in this embodiment.

When the result in Step 608 is no, the input-output control unit 502 does not execute Step 609.

In Steps 610 to 615, the input-output control unit 502 controls the uplink traffic. The input is the repeater sector on the mobile station side, and the output is the repeater sector on the base station side in relation to the input-output control unit 502 of this embodiment.

In Step 610, the input-output control unit 502 determines whether or not the output of the power amplifier 513 in the repeater sector A can be decreased. More specifically, when all of the following three conditions are met, it is determined that the output can be decreased.

(e) The power amplifier output is larger than a minimum value.

(f) The repeater sector A is not connected with the repeater sector B.

(g) The repeater sector A is not connected to the repeater sectors on the mobile station side other than the repeater sector B.

The conditions (f) and (g) mean that the power amplifier output can be decreased only when the repeater sector A is connected to none of the repeater sectors on the mobile station side. When the power amplifier output is decreased in a state where the condition (g) is not met, a communication via the repeater sectors except for the repeater sectors to be controlled (that is, the repeater sector A, the repeater sector B, and the repeater sector on the base station side C originally connected with the repeater sector B) is destabilized more than necessary, which is undesirable.

If the condition (g) is excluded, equivalently, the propagation attenuation of the transmission path that reaches the base station via the repeater sector A from the repeater sectors on the mobile station side other than the repeater sector B gradually increases. As a result, the mobile stations that conduct the uplink traffic by using the repeater sectors on the mobile station side except for the repeater sector B are handed off at the same time, and hence the fear becomes high that the delay time of the hand-off time increases, or that the line is disconnected. Hence, it is not preferable that the condition (g) be excluded.

When the result in Step 610 is yes (that is, when it is determined that the output of the power amplifier 513 in the repeater sector A can be decreased), the input-output control unit 502 decreases the power amplifier output of the repeater sector A in Step 611. In this situation, when the power amplifier output is decreased from the maximum value to the minimum value at once, there is the fear that the line of the mobile station connected to the base station with the aid of the repeater is disconnected as in Step 605. In other words, the quality of the service is deteriorated, which is not preferable. Conversely, it is desirable that the output be gradually decreased (for example, 1 dB per one second) to naturally effect the hand-off of the mobile station in this embodiment.

When the result in Step 610 is no, the input-output control unit 502 does not execute Step 611.

In Step 612, the input-output control unit 502 determines whether or not there is room to decrease the output of the repeater sector A. The determination contents per se are identical with those in Step 610, but a difference from Step 610 resides in that the result in Step 611 is reflected. More specifically, when the power amplifier output of the repeater sector A is the minimum, it is determined that there is no room to further decrease the output of the repeater sector A.

When it is determined that there is no room to decrease the output of the repeater sector A in Step 612, the input-output control unit 502 changes over the switch 512 of the repeater sector B input to the repeater sector A from "disconnected" (that is, off) to "connected" (that is, on).

When it is determined that there is room to decrease the output of the repeater sector A in Step 612, the input-output control unit 502 does not execute processing of Step 613.

In Step 614, the input-output control unit 502 determines whether or not the output of the power amplifier 513 in the repeater sector A can be increased. More specifically, when the following two conditions are met, it is determined that the output can be increased.

(h) The power amplifier output is smaller than a maximum value.

(j) The repeater sector A is being connected with the repeater sector B.

When the result in Step 614 is yes (that is, when it is determined that the output can be increased), the input-output control unit 502 increases the output of the power amplifier 513 in the repeater sector A in Step 615. In this situation, when the power amplifier output is increased from the minimum value to the maximum value at once, the interference appears to rapidly increase in relation to the base station. Therefore, there is a risk that no communication is made until the base station is adjusted to the rapidly increased interference, which is not preferable. As in Step 611, it is desirable that the output be gradually increased (for example, 1 dB per one second) to naturally effect the hand-off of the mobile station in this embodiment.

Upon completion of Step 615, the processing returns to Step 601.

When the result in Step 614 is no, the input-output control unit 502 returns to Step 601 without executing processing of Step 615.

FIGS. 21A to 21D are explanatory diagrams illustrating an example of the input/output control on the downlink traffic side of the repeater 108 according to the first embodiment of this invention.

FIG. 21A is a table indicating from which base station sector the respective sectors of the repeater 108 (repeater sectors) most strongly receive the signal, In other words, the measurement result by the state measurement unit 506.

In an example of FIG. 21A, the sector #1 on the base station side (that is, the repeater sector #1 that receives the signal from the base station 101 in the downlink traffic) most strongly receives the signal from the base station sector identified by the ID "500". The sectors #2 and #3 on the base station side most strongly receive the signals from the base station sectors identified by the IDs "384" and "64", respectively.

FIG. 21B is a table illustrating the output powers of the respective sectors on the mobile station side within the repeater 108, and the connection status between the respective sectors on the mobile station side and the respective sectors on the base station side. In an example of FIG. 21B, the output powers of all the sectors on the mobile station side are 100 [mW], and all of the sectors on the mobile station side are connected to the sector #1 on the base station side (base station sector ID = 500). More specifically, as illustrated in FIGS. 4A and 4B, the repeater 108 receives the signal transmitted from one base station in the sector #1 on the base station side, amplifies the received signal, and transmits the amplified signal from all of the sectors on the mobile station side toward all directions.

A state of the switch 518 illustrated in FIG. 21B is coincidental with that illustrated in FIG. 19A.

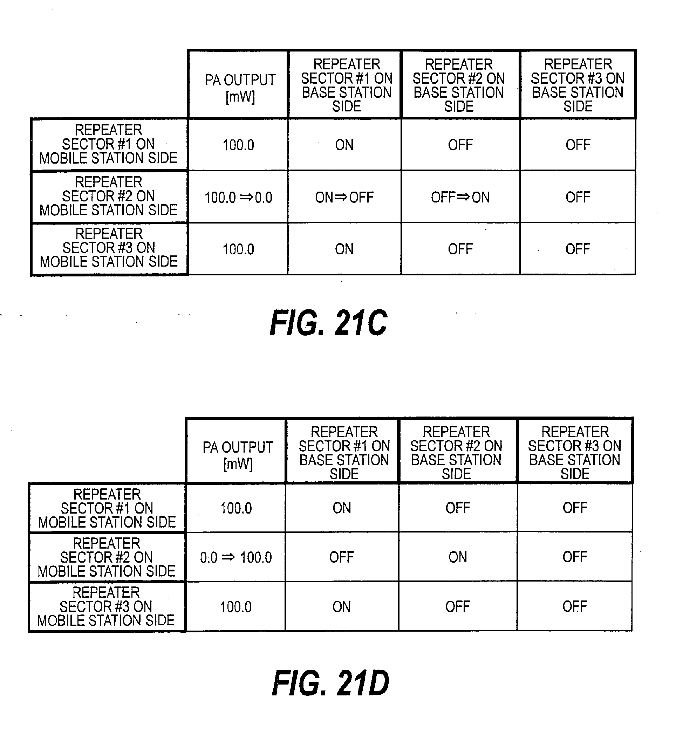

FIG. 21C illustrates a control example when the repeater output related to the sector #2 on the base station side is to be increased. First, the input-output control unit 502 selects, as control candidates, the sectors on the mobile station side whose connection with the sector #2 on the base station side is off among the sectors on the mobile station side. When there are a plurality of candidates, the input-output control unit 502 narrows the sectors on the mobile station side down to one repeater sector according to the following basis.

· A sector on the mobile station side directed toward the same direction as that of the sector A on the base station side being a target;
· A sector on the mobile station side which is minimum in power amplifier (PA) output among the plurality of candidates;
· A sector on the mobile station side connected to the repeater sector on the base station side (FIG. 10A) which can receive the transmit signal of the base station sector ID indicating that the output control value illustrated in FIG. 14B is decreased, with the maximum power; and
· A sector on the mobile station side selected at random when the candidates cannot be narrowed in the above-mentioned manners.

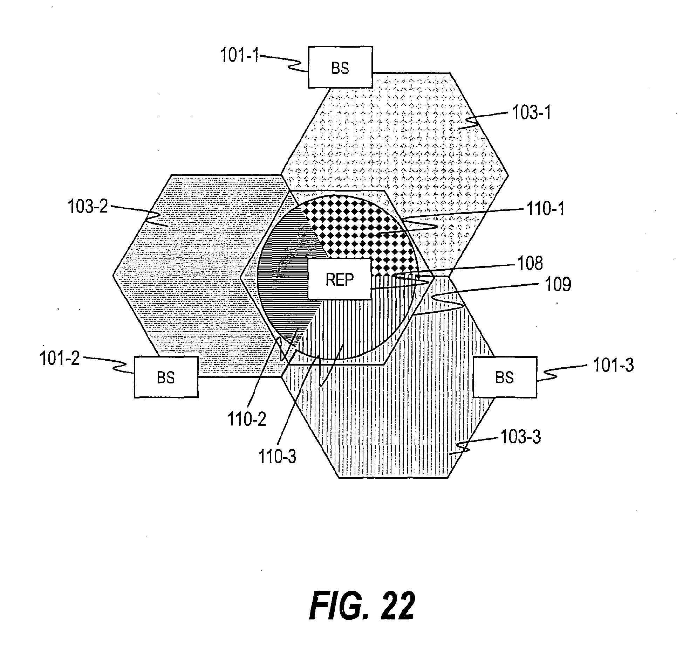

The first item realizes a state in which the base station sector and the repeater sector A sandwich the mobile station. With this configuration, the receive power at the mobile station of the base station sector within the base station sector is improved. When a traffic among the base station sectors around the repeater is balanced, a resistance to the inter-section interference of the respective base station sectors is enhanced, whereby one stable configuration in this invention is realized (which is described with reference to FIG. 22).

The second item means that the sector on the mobile station side which is estimated to be smallest in an impact on the system due to the changeover of the switch is to be controlled. When the downlink switch 507 changes over, the transmit output of the repeater sector to be controlled is decreased once as illustrated in a flow of FIG. 20. Therefore, the repeater sector that is originally small in the transmit output is selected, thereby minimizing the number of affected mobile stations.

The third item means that the repeater control unit 201 selects the repeater sector on the mobile station side related to the base station sector whose output may be decreased as illustrated in FIG. 14B. The base station sector whose output may be decreased is associated with the repeater sector on the base station side as illustrated in FIG. 10A by the input-output control unit 502. The repeater sector on the mobile station side connected to the subject repeater sector on the base station side by the downlink switch 507 being in the "on" state is to be controlled.

In the selected sector on the mobile station side, the input-output control unit 502 controls the input/output in the following procedure.

(i) The PA output of the subject sector on the mobile station side is minimized.
(ii) A connection with the sector on the base station side being connected to the subject sector on the mobile station side is switched off.
(iii) A connection with the sector on the base station side newly connected to the subject sector on the mobile station side is switched on.
(iv) The PA output of the subject sector on the mobile station side is maximized.

Among the above-mentioned controls, the results of executing the items (i) to (iii) are illustrated in FIG. 21C, and the results of executing the item (iv) are illustrated in FIG. 21D. When FIGS. 21A and 21D are considered together, the sectors #1 and #3 on the mobile station side operate as a repeater of the base station sector ID = 500, and the sector #2 on the mobile station side operates as a repeater of the base station sector ID = 384.

FIG. 22 is an explanatory diagram illustrating an example of a stable configuration of the repeater 108 according to the first embodiment of this invention.

The repeater 108 amplifies radio signals related to the base station sectors (that is, the base station sectors 103-1, 103-2, and 103-3) opposite to the respective repeater sectors 110-1, 110-2, and 110-3. The mutual interference in signals received or transmitted by the repeater 108 is suppressed by the directional antenna, whereby the respective mobile stations that communicate with the respective base station sectors or the respective base station sectors can suppress interference from the other base station sectors. When the traffic is balanced among the base station sectors, the state of FIG. 22 is desirable.

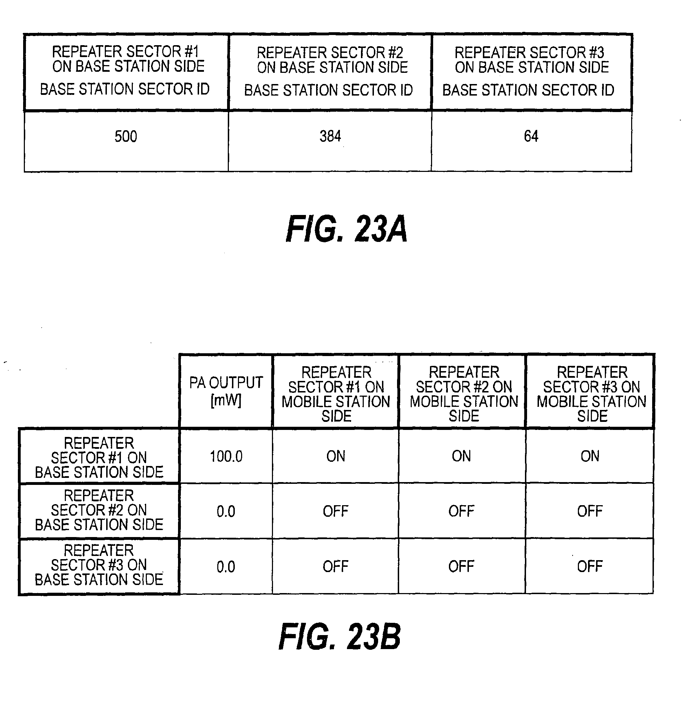

FIGS. 23A to 23D are explanatory diagrams illustrating an example of the input/output control on the uplink traffic side of the repeater 108 according to the first embodiment of this invention.

FIG. 23A is a table (that is, the measurement result in the state measurement unit 506) indicating from which base station sector the respective sectors of the repeater (repeater sectors) most strongly receive the signal, which is identical with FIG. 21A.

FIG. 23B is a table illustrating the output power of the respective sectors on the base station side within the repeater, and the connection status of the sectors on the base station side with the sectors on the mobile station side. In an example of FIG. 23B, all of the sectors on the mobile station side are connected to the sector #1 on the base station side, the output power of the sector #1 on the base station side is 100 [mW], and the output powers of other sectors on the base station side are 0 [mW]. More specifically, the example of FIG. 23B is an example of the downlink illustrated in FIGS. 4A and 4B, which corresponds to a case in which all of arrows each indicative of a communication direction are inverted. In other words, FIG. 23B illustrates a state in which the mobile station transmit signals received by the repeater 108 from all directions are multiplexed inside the repeater, and are amplified and transmitted to only one base station.

The state of the switch 518 illustrated in FIG. 23B is coincident with that illustrated in FIG. 19B.

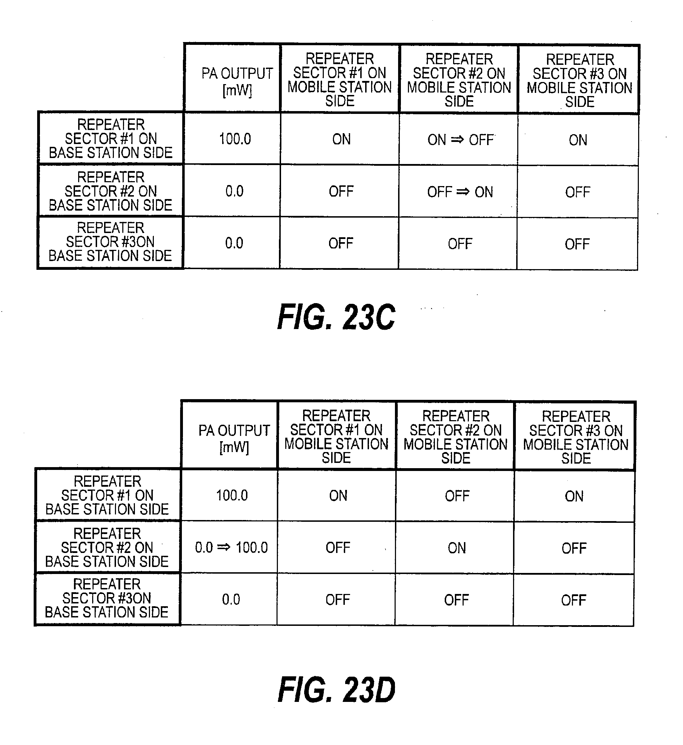

FIG. 23C illustrates a control example when the repeater output related to the sector #2 on the base station side is to be increased. First, the sectors on the mobile station side whose connection with the sector #2 on the base station side is off are selected as the control candidates among the sectors on the mobile station side. The selection employs the result implemented on the downlink traffic side of FIG. 21C as it is, in view of the communication symmetric property of uplink and downlink.

In the sector on the base station side related to the selected sector on the mobile station side, the input-output control unit 502 controls the input/output in the following procedure.

(I) The PA output of the sector on the base station side being connected to the subject sector on the mobile station side is minimized.
(II) A connection with the sector on the base station side being connected to the subject sector on the mobile station side is switched off.
(III) A connection with the sector on the base station side newly connected to the subject sector on the mobile station side is switched on.
(IV) The PA output of the newly connected sector on the base station side is maximized.

Among the above-mentioned controls, the results of executing the items (I) to (III) are illustrated in FIG. 23C, and the results of executing the item (IV) are illustrated in FIG. 23D. When FIGS. 23A and 23D are considered together, the sectors #1 and #3 on the mobile station side operate as a repeater of the base station sector ID = 500 through the sector #1 on the base station side, and the sector #2 on the mobile station side operates as a repeater of the base station sector ID = 384 through the sector #2 on the base station side.

In the procedure of the above-mentioned item (I), when the sector on the base station side is connected to another sector on the mobile station side in addition to the subject sector on the mobile station side, there may be a case in which the PA output cannot be minimized as described in Step 601 of FIG. 20. When the procedure of the above-mentioned item (II) is implemented in that state, the mobile station communicating via the subject sector on the mobile station side rapidly loses the base station, whereby there is concern about the deterioration of the quality due to disconnection of the line.

Then, a second embodiment for avoiding the above-mentioned concern is described.

The second embodiment is the same as the first embodiment except for the difference described below.

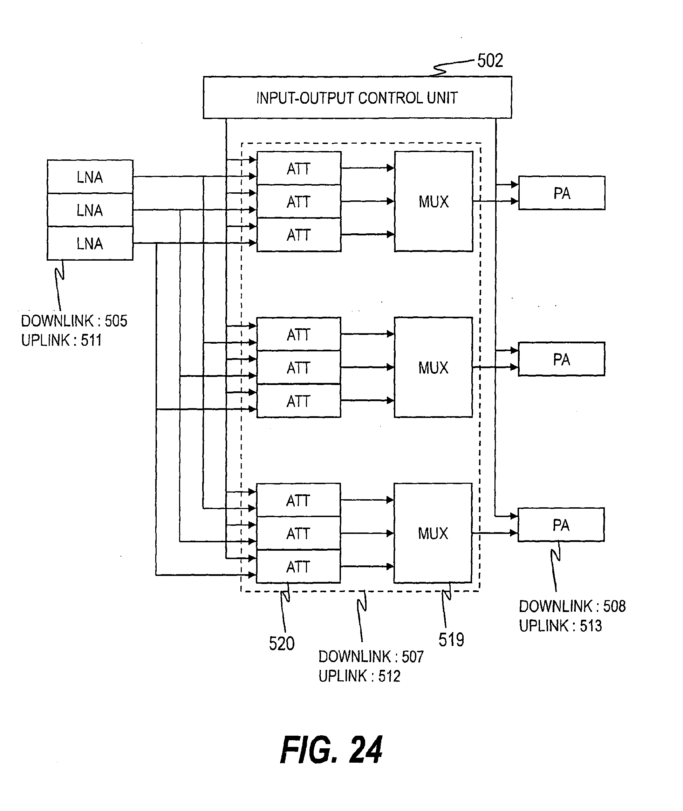

FIG. 24 is an explanatory diagram illustrating a configuration of a switch periphery inside of the repeater according to the second embodiment of this invention.

The basic configuration of the second embodiment is similar to that of the first example illustrated in FIG. 18, but the repeater 108 of the second embodiment includes a variable attenuator 520 instead of the switch 518. The attenuator 520 continuously (or gradually) changes the attenuation to change over the connection between the receiving side repeater sector and the transmitting side repeater sector whereas the switch 518 changes over the connection from on to off (or from off to on). With the above-mentioned operation, the sudden loss of the base station due to the mobile station 107 is prevented, whereby the above-mentioned concern about the deterioration of the quality due to the disconnection of the line is avoided.

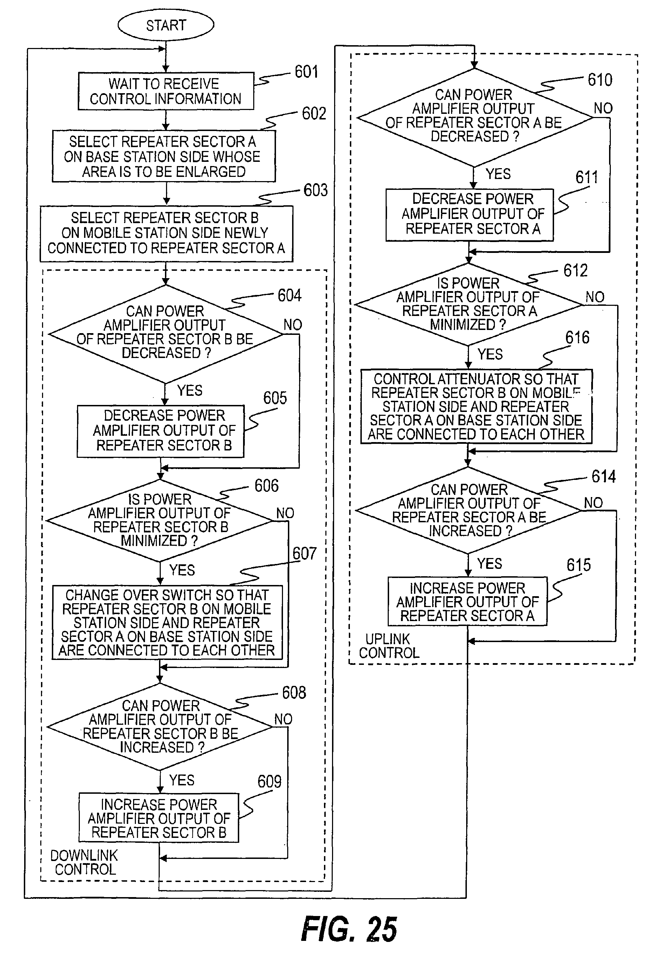

FIG. 25 is a flowchart illustrating a repeater input/output control according to the second embodiment of this invention.

A difference from the control (FIG. 20) of the first embodiment resides in that processing of Step 616 is executed instead of processing of Step 613 on the uplink traffic side. In other words, the uplink traffic side employs the configuration of the attenuator illustrated in FIG. 24, and the downlink traffic side employs the configuration of the switch illustrated in FIG. 18.

In Step 616, the input-output control unit 502 maximizes the attenuation of the attenuator 520 that connects the sector B on the mobile station side selected in Step 603 and the sector on the base station side connected to that sector B on the mobile station side, and minimizes the attenuation of the attenuator 520 that connects the sector A on the base station side selected in Step 602 and the above-mentioned sector B on the mobile station side. As a result, the sector B on the mobile station side changes over the sector on the base station side being a connection destination. In this example, the rapid changeover of the attenuation is not desirable because the rapid changeover induces the rapid increase of interference or base station loss as has been already described. It is desirable that the attenuation be gradually changed (for example, 1 dB per one second) to naturally effect the hand-off of the mobile station in this embodiment.

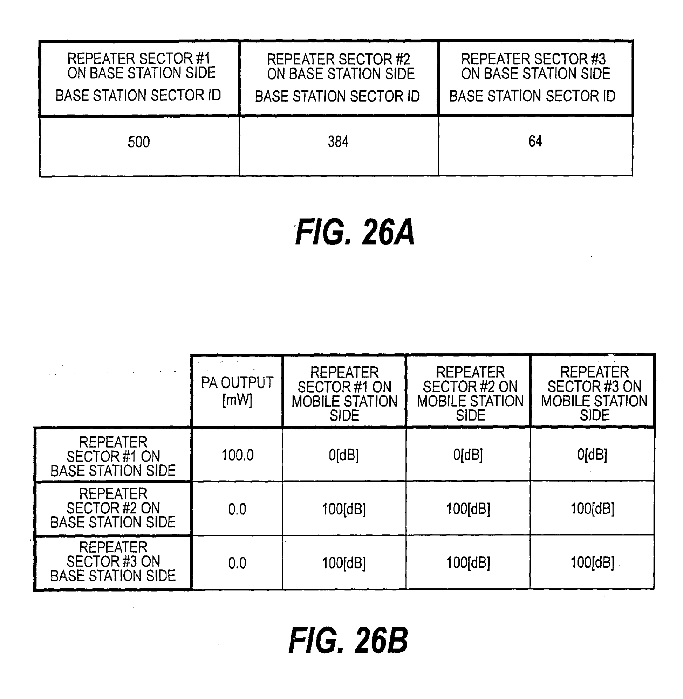

FIGS. 26A to 26D are explanatory diagrams illustrating an example of the input/output control on the uplink traffic side of the repeater 108 according to the second embodiment of this invention.

FIG. 26A is a table indicating from which base station sector the respective sectors of the repeater (repeater sectors) most strongly receive the signal, and illustrates measurement result by the state measurement unit 506, which is identical with FIG. 23A.

FIG. 26B is a table illustrating the output powers of the respective sectors on the base station side within the repeater, and the connection status of the respective sectors on the base station side with the respective sectors on the mobile station side. In an example of FIG. 26B, all of the sectors on the mobile station side are connected to the sector #1 on the base station side, the output power of the sector #1 on the base station side is 100 [mW], and the output powers of other sectors on the base station side are 0 [mW].

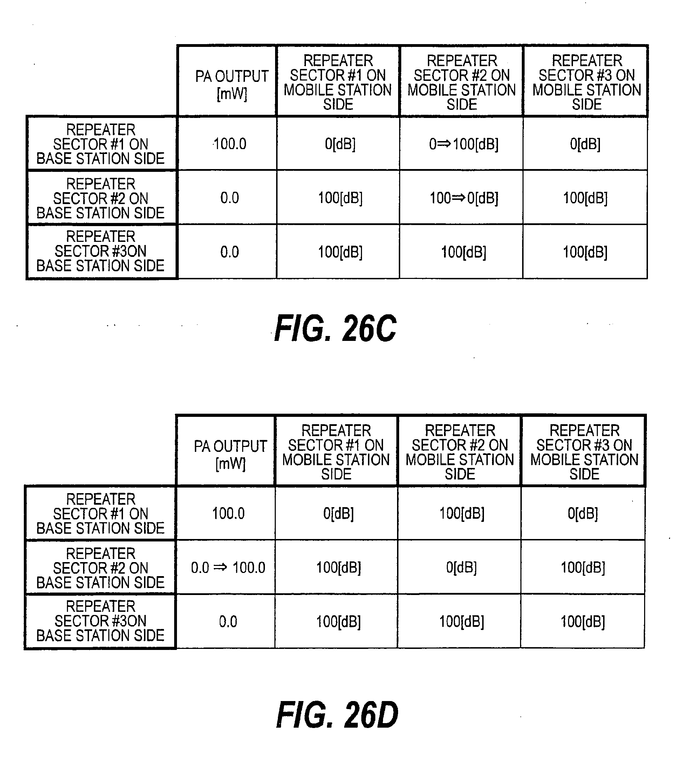

FIG. 26C illustrates a control example when the repeater output related to the sector #2 on the base station side is to be increased. First, the sectors on the mobile station side whose connection with the sector #2 on the base station side is the maximum in the attenuation of the attenuator 520 are selected as control candidates among the sectors on the mobile station side. The selection employs the result implemented on the downlink traffic side of FIG. 21C as it is, in view of the communication symmetric property of uplink and downlink.

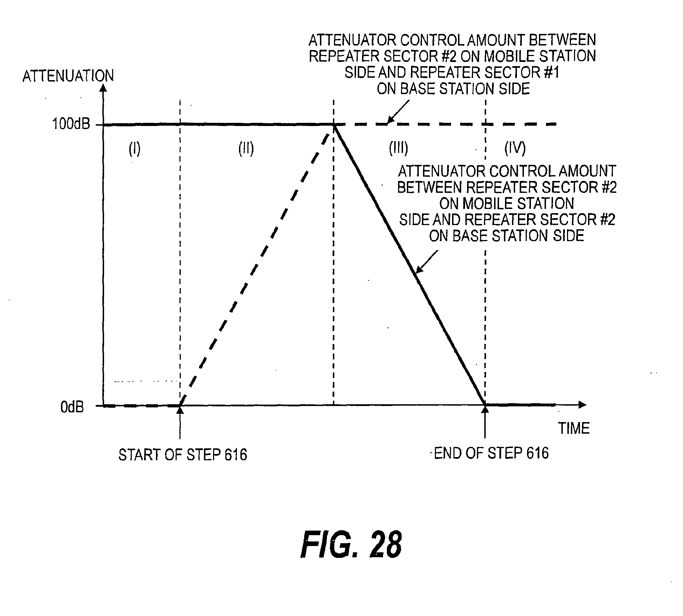

In the sector on the base station side related to the selected sector on the mobile station side, the input-output control unit 502 controls the input/output in the following procedure. The control example of the items (II) and (III) is illustrated in FIG. 28 together with time lines of the above-mentioned items (I) to (IV).

(I) The PA output of the sector on the base station side being connected to the subject sector on the mobile station side is minimized.
(II) The attenuation of the connection attenuator with the sector on the base station side being connected to the subject sector on the mobile station side is maximized.
(III) The attenuation of the connection attenuator with the sector on the base station side newly connected to the subject sector on the mobile station side is minimized.
(IV) The PA output of the newly connected sector on the base station side is maximized.

Among the above-mentioned controls, the results of executing the items (II) and (III) are illustrated in FIG. 26C, and the results of executing the item (IV) are illustrated in FIG. 26D. As a result, the same results as those of the first embodiment illustrated in FIG. 23D are obtained.

FIG. 28 is an explanatory diagram illustrating the control of the attenuator according to the second embodiment of this invention.

More specifically, FIG. 28 illustrates a variation in the attenuation of the attenuator 520 in Step 616 of FIG. 25, and after and before Step 616. The input-output control unit 502 controls the respective attenuators 520 so as to change the attenuation as illustrated in FIG. 28.

Before Step 616 starts, the attenuation of the attenuator 520 that connects the sector #2 on the mobile station side and the sector #1 on the base station side is 0 dB. On the other hand, the attenuation of the attenuator 520 that connects the sector #2 on the mobile station side and the sector #2 on the base station side is 100 dB. This state corresponds to the result of executing the above-mentioned item (I).

When Step 616 starts, the input-output control unit 502 increases the attenuation of the attenuator 520 that connects the sector #2 on the mobile station side and the sector #1 on the base station side at a given change rate (for example, 1 dB per one second). This processing corresponds to the above-mentioned item (II).

When the attenuation of the attenuator 520 that connects the sector #2 on the mobile station side and the sector #1 on the base station side reaches 100 dB, the input-output control unit 502 decreases the attenuation of the attenuator 520 that connects the sector #2 on the mobile station side and the sector #2 on the base station side at a given change rate (for example, 1 dB per one second) while maintaining the attenuation of the attenuator 520 that connects the sector #2 on the mobile station side and the sector #1 on the base station side. The processing corresponds to the above-mentioned item (III).

At a time point when the attenuation of the attenuator 520 that connects the sector #2 on the mobile station side and the sector #2 on the base station side reaches 0 dB, Step 616 is completed. Thereafter, the input-output control unit 502 maintains the attenuation of the respective attenuators 520. This state corresponds to the results of executing the above-mentioned item (IV).

This invention is applied to a radio communication system, in particular, a cellular system, thereby enabling plane development of service with the arrangement of a smaller number of base stations. Further, the load balance between the base stations is made, thereby enabling the service satisfaction degree among the mobile station devices to be equalized, and the investment cost-benefit performance of the base station installation to be enhanced.

While the present invention has been described in detail and pictorially in the accompanying drawings, the present invention is not limited to such detail but covers various obvious modifications and equivalent arrangements, which fall within the purview of the appended claims.

**Claims**

1.  A radio communication system, comprising:

    a plurality of base stations (101-1, 101-2, 101-3); and
    a repeater apparatus (108),
    wherein the repeater apparatus (108) is configured to:

    amplify and transmit a radio signal received from at least one of the plurality of base stations (101-1, 101-2, 101-3); and
    control a domain in which the radio signal is transmitted based on a traffic amount of each of the plurality of base stations (101-1, 101-2, 101-3).

2.  The radio communication system according to claim 1, wherein the repeater apparatus (108) includes a plurality of repeater sector antennas (503, 510), and is further configured to control a connection between the plurality of repeater sector antennas (503, 510) that have received the radio signal and the plurality of repeater sector antennas (503, 510) that transmit the received radio signal based on the traffic amount of the each of the plurality of base stations (101-1, 101-2, 101-3), to thereby control the domain in which the radio signal is transmitted.

3.  The radio communication system according to claim 2, further comprising a repeater control unit (201) that communicates with the plurality of base stations (101-1, 101-2, 101-3) and the repeater apparatus (108), wherein the repeater control unit (201) is configured to:

    acquire information indicative of the traffic amount of the each of the plurality of base stations (101-1, 101-2, 101-3) from the each of the plurality of base stations (101-1, 101-2, 101-3);
    produce a control signal for controlling at least one of an intensity of the radio signal to be transmitted and the connection between the plurality of repeater sector antennas (503, 510) based on the acquired traffic amount; and
    transmit the produced control signal to the repeater apparatus (108), and

    wherein the repeater apparatus (108) controls the at least one of the intensity of the radio signal to be transmitted and the connection between the plurality of repeater sector antennas (503, 510) based on the control signal received from the repeater control unit (201).

4. The radio communication system according to claim 3,
wherein the each of the plurality of base stations (101-1, 101-2, 101-3) includes a plurality of base station sectors,
wherein the repeater apparatus (108) is further configured to:

specify the plurality of base station sectors being transmission sources of the radio signal which are most strongly received by the plurality of repeater sector antennas (503, 510); and
transmit information for identifying the specified plurality of base station sectors to the repeater control unit (201), and

wherein the repeater control unit (201) produces the control signal based on the information for identifying the specified plurality of base station sectors and the acquired traffic amount.

5. The radio communication system according to claim 4, wherein the repeater control unit (201) is further configured to:

specify one of the plurality of base stations (101-1, 101-2, 101-3) based on the acquired traffic amount; and
produce the control signal for controlling the domain in which the radio signal received from the specified one of the plurality of base stations (101-1, 101-2, 101-3) is transmitted to be one of enlarged and reduced.

6. The radio communication system according to claim 5, wherein the repeater control unit (201) is further configured to specify a base station that is relatively small in the acquired traffic amount among the plurality of base stations (101-1, 101-2, 101-3).

7. The radio communication system according to claim 6,
wherein the plurality of base stations (101-1, 101-2, 101-3) include at least a first base station (101-1) and a plurality of base stations (101-2, 101-3) other than the first base station (101-1), and
wherein the repeater control unit (201) is further configured to specify the first base station (101-1) as the base station that is relatively small in the acquired traffic amount in the case where a ratio of the traffic amount of the first base station (101-1) with respect to an average value of the traffic amounts of the plurality of base stations (101-2, 101-3) other than the first base station (101-1) is smaller than a given threshold value.

8. A repeater apparatus (108) which comprises a plurality of antennas (503, 510) and relays a communication between at least one base station (101-1, 101-2, 101-3) and at least one mobile station (107) using a radio signal,
wherein at least one of the plurality of antennas (503, 510) is a repeater sector on the base station side antenna (503) that transmits and receives the radio signal with respect to the at least one base station (101-1, 101-2, 101-3), and at least one of the plurality of antennas (503, 510) is a repeater sector antenna (5100) on the mobile station side that transmits and receives the radio signal with respect to the at least one mobile station (107); and
wherein the repeater apparatus (108) includes:

at least one switch (518) that changes over a connection between the antenna (503, 510) that receives the radio signal and the antenna (503, 510) that transmits the radio signal received by the one of the antenna (503, 510) that receives the radio signal;
at least one amplifier (508) that amplifies the radio signal to be transmitted from the antenna (503, 510); and
an input-output control unit (502) that controls the at least one switch (518) and the at least one amplifier (508).

9. The repeater apparatus (108) according to claim 8, further comprising a state measurement unit,
wherein the state measurement unit (506) is configured to:

specify a base station sector of the at least one base station that has transmitted the radio signal which is most strongly received by each of the plurality of antennas (503, 510); and
output information for identifying the specified base station sector.

10. The repeater apparatus (108) according to claim 9, wherein the state measurement unit (506) includes:

a plurality of A/D converters (514) that convert the radio signal received by the plurality of antennas (503, 510) into digital data;
a plurality of synchronizers (515) that synchronize frames; and
a plurality of cell searchers (516) that specify the base station sector that has transmitted the received radio signal.

**11.** The repeater apparatus (108) according to claim 8,
further comprising at least one switch (518) and at least one amplifier (508) which are used for a radio signal on a downlink traffic from the at least one base station (101-1, 101-2, 101-3) to the at least one mobile station (107), and at least one switch (518) and at least one amplifier (513) which are used for a radio signal on an uplink traffic from the at least one mobile station (107) to the at least one base station (101-1, 101-2, 101-3),
wherein the input-output control unit (502) is configured to control the at least one switch (518) and the at least one amplifier (508) which are used for the downlink traffic and the at least one switch (518) and the at least one amplifier (513) which are used for the uplink traffic.

**12.** The repeater apparatus (108) according to claim 11, which is configured to specify, upon receiving information for specifying the base station sector for which a coverage area is to be enlarged, the repeater sector antenna (503) on the base station side that most strongly receives the radio signal from the specified base station sector and the repeater sector antenna (510) on the mobile station side that is to transmit the radio signal received by the repeater sector antenna (503) on the base station side among the plurality of antennas (503, 510) based on the information.

**13.** The repeater apparatus (108) according to claim 12, which is further configured to:

decrease an output of the at least one amplifier (508) that amplifies the radio signal to be transmitted by the specified repeater sector antenna (503) on the mobile station side;
control the connection by the at least one switch so that the radio signal received by the specified repeater sector on the base station side antenna (503) is transmitted from the specified repeater sector antenna (510) on the mobile station side; and
thereafter, increase the output of the at least one amplifier (508) that amplifies the radio signal to be transmitted by the specified repeater sector antenna (510) on the mobile station side.

**14.** The repeater apparatus (108) according to claim 12, which is further configured to:

decrease an output of the at least one amplifier (508) that amplifies the radio signal to be transmitted by the specified repeater sector on the base station side antenna (503);
control the connection by the at least one switch (518) so that the radio signal received by the specified repeater sector antenna (510) on the mobile station side is transmitted from the specified repeater sector antenna (503) on the base station side; and
thereafter, increase the output of the at least one amplifier (513) that amplifies the radio signal to be transmitted by the specified repeater sector on the base station side antenna (503).

**15.** The repeater apparatus (108) according to claim 8, wherein the at least one switch (518) is configured to control both passing and blocking, or attenuation of the radio signal exchanged among the plurality of antennas (503, 510), to thereby execute the connection.

**FIG. 1**

101-1

BS

107

103-1

103-2

MS

101-2

BS

101-3

BS

103-3

**FIG. 2A**

101-1

BS

107-2

MS

103-1

107-3

MS

107-1

103-2

MS

107-4

MS

101-2

BS

107-5

MS

107-6

MS

101-3

BS

107-7

MS

107-8

MS

103-3

**FIG. 2B**

101-1
BS
103-1
103-2
108
REP
109
101-2
BS
101-3
BS
103-3

**FIG. 3A**

101-1
BS
107-2
MS
103-1
107-3
MS
107-1
MS
107-4
103-2
MS
108
109
REP
107-5
107-6
MS
101-2
BS
MS
101-3
BS
107-7
MS
107-8
MS
103-3

**FIG. 3B**

101-1
BS
103-1
103-2
108
REP
109
101-2
BS
101-3
BS
110
103-3

**FIG. 4A**

101-1
BS
103-1
103-2
108
REP
109
101-2
BS
101-3
BS
111
103-3

**FIG. 4B**

**FIG. 5A**

CP

OFDM SYMBOL

CP

OFDM SYMBOL

DELAY TIME
DIFFERENCE

FFT PROCESSING SAMPLE
ON RECEIVING SIDE
= OFDM SYMBOL LENGTH

**FIG. 5B**

**FIG. 6A**

**FIG. 6B**

FIG. 7

**FIG. 8**

*FIG. 9*

| ITEM | VALUE |
|------|-------|
| REPEATER ID | 1000 |
| NUMBER OF REPEATER SECTORS | 3 |
| REPEATER SECTOR #1 BASE STATION SECTOR ID | 500 |
| REPEATER SECTOR #2 BASE STATION SECTOR ID | 384 |
| REPEATER SECTOR #3 BASE STATION SECTOR ID | 64 |

## FIG. 10A

| REPEATER ID | REPEATER SECTOR #1 BASE STATION SECTOR ID | REPEATER SECTOR #2 BASE STATION SECTOR ID | REPEATER SECTOR #3 BASE STATION SECTOR ID |
|-------------|------|------|------|
| 1000 | 500 | 384 | 64 |
| 1001 | 24 | 96 | 128 |
| 1002 | 256 | 312 | 144 |
| ⋮ | ⋮ | ⋮ | ⋮ |

## FIG. 10B

| ITEM | VALUE |
|---|---|
| BASE STATION SECTOR ID | 500 |
| DOWNLINK THROUGHPUT [Mbps] | 20 |
| UPLINK THROUGHPUT [Mbps] | 15 |

## FIG. 11A

| ITEM | VALUE |
|---|---|
| BASE STATION SECTOR ID | 500 |
| DOWNLINK RESOURCE UTILIZATION [%] | 30 |
| UPLINK RESOURCE UTILIZATION [%] | 20 |

## FIG. 11B

| BASE STATION SECTOR ID | DOWNLINK THROUGHPUT[ Mbps] | UPLINK THROUGHPUT [Mbps] |
|---|---|---|
| 500 | 20 | 15 |
| 652 | 30 | 15 |
| 896 | 5 | 15 |
| ⋮ | ⋮ | ⋮ |

## FIG. 12A

| BASE STATION SECTOR ID | DOWNLINK RESOURCE UTILIZATION [%] | UPLINK RESOURCE UTILIZATION [%] |
|---|---|---|
| 500 | 30 | 20 |
| 652 | 60 | 50 |
| 896 | 90 | 70 |
| ⋮ | ⋮ | ⋮ |

## FIG. 12B

START

WAIT FOR NEXT TRAFFIC
INFORMATION ACQUISITION
CYCLE — 301

COLLECT STATE INFORMATION
FROM RESPECTIVE REPEATERS — 302

COLLECT TRAFFIC INFORMATION
FROM RESPECTIVE
BASE STATIONS — 303

START REPEATER LOOP
r_cnt = 0 — 304

IS TRAFFIC OF GIVEN
BASE STATION SMALLER THAN
THRESHOLD VALUE WITH RESPECT TO
NEIGHBORING BASE STATIONS ? — 305

NO

YES

PRODUCE CONTROL INFORMATION
FOR RELATIVELY ENLARGING AREA
OF THE GIVEN BASE STATION — 306

UPDATE COUNTER
r_cnt++ — 307

NO

HAS CONTROL
INFORMATION PRODUCTION
FOR ALL REPEATERS BEEN
COMPLETED ? — 308

YES

TRANSMIT CONTROL
INFORMATION — 309

*FIG. 13*

33

| ITEM | VALUE |
|---|---|
| REPEATER ID | 1000 |
| NUMBER OF REPEATER SECTOR WHOSE RELATIVE OUTPUT IS TO BE INCREASED | 1 |

## FIG. 14A

| ITEM | VALUE |
|---|---|
| REPEATER ID | 1000 |
| NUMBER OF REPEATER SECTORS | 3 |
| OUTPUT CONTROL OF REPEATER SECTOR #1 (0: INCREASE, 1: REMAIN, 2: DECREASE) | 0 |
| OUTPUT CONTROL OF REPEATER SECTOR #2 (0: INCREASE, 1: REMAIN, 2: DECREASE) | 1 |
| OUTPUT CONTROL OF REPEATER SECTOR #3 (0: INCREASE, 1: REMAIN, 2: DECREASE) | 2 |

## FIG. 14B

START

UPDATE STATE OF
REPEATER — 401

WAIT TO RECEIVE STATE
INFORMATION REQUEST — 402

TRANSMIT STATE
INFORMATION
TO REPEATER CONTROL UNIT — 403

UPDATE STATE OF
REPEATER — 404

WAIT TO RECEIVE
CONTROL INFORMATION — 405

CONTROL TRANSMISSION/
RECEPTION — 406

TRANSMIT RESPONSE TO
CONTROL INFORMATION
TRANSMISSION — 407

*FIG. 15*

**FIG. 16**

| LNA | → | ADC | → | SYNCHRONIZER | → | CELL SEARCHER | → | |
|---|---|---|---|---|---|---|---|---|
| LNA | → | ADC | → | SYNCHRONIZER | → | CELL SEARCHER | → | MEMORY |
| LNA | → | ADC | → | SYNCHRONIZER | → | CELL SEARCHER | → | |

505     514     515     516     517

# FIG. 17

FIG. 18

| REPEATER SECTOR ON BASE STATION SIDE (RECEIVING SIDE) | REPEATER SECTOR ON MOBILE STATION SIDE (TRANSMITTING SIDE) | ON/OFF |
|---|---|---|
| 1 | 1 | ON |
| 2 | 1 | OFF |
| 3 | 1 | OFF |
| 1 | 2 | ON |
| 2 | 2 | OFF |
| 3 | 2 | OFF |
| 1 | 3 | ON |
| 2 | 3 | OFF |
| 3 | 3 | OFF |

## FIG. 19A

| REPEATER SECTOR ON MOBILE STATION SIDE (RECEIVING SIDE) | REPEATER SECTOR ON BASE STATION SIDE (TRANSMITTING SIDE) | ON/OFF |
|---|---|---|
| 1 | 1 | ON |
| 2 | 1 | ON |
| 3 | 1 | ON |
| 1 | 2 | OFF |
| 2 | 2 | OFF |
| 3 | 2 | OFF |
| 1 | 3 | OFF |
| 2 | 3 | OFF |
| 3 | 3 | OFF |

## FIG. 19B

# EP 2 152 034 A2

**FIG. 20**

START

WAIT TO RECEIVE CONTROL INFORMATION — 601

SELECT REPEATER SECTOR A ON BASE STATION SIDE WHOSE AREA IS TO BE ENLARGED — 602

SELECT REPEATER SECTOR B ON MOBILE STATION SIDE NEWLY CONNECTED TO REPEATER SECTOR A — 603

CAN POWER AMPLIFIER OUTPUT OF REPEATER SECTOR B BE DECREASED ? — 604 — NO

YES

DECREASE POWER AMPLIFIER OUTPUT OF REPEATER SECTOR B — 605

IS POWER AMPLIFIER OUTPUT OF REPEATER SECTOR B MINIMIZED ? — 606 — NO

YES

CHANGE OVER SWITCH SO THAT REPEATER SECTOR B ON MOBILE STATION SIDE AND REPEATER SECTOR A ON BASE STATION SIDE ARE CONNECTED TO EACH OTHER — 607

CAN POWER AMPLIFIER OUTPUT OF REPEATER SECTOR B BE INCREASED ? — 608 — NO

YES

INCREASE POWER AMPLIFIER OUTPUT OF REPEATER SECTOR B — 609

DOWNLINK CONTROL

CAN POWER AMPLIFIER OUTPUT OF REPEATER SECTOR A BE DECREASED ? — 610 — NO

YES

DECREASE POWER AMPLIFIER OUTPUT OF REPEATER SECTOR A — 611

IS POWER AMPLIFIER OUTPUT OF REPEATER SECTOR A MINIMIZED ? — 612 — NO

YES

CHANGE OVER SWITCH SO THAT REPEATER SECTOR B ON MOBILE STATION SIDE AND REPEATER SECTOR A ON BASE STATION SIDE ARE CONNECTED TO EACH OTHER — 613

CAN POWER AMPLIFIER OUTPUT OF REPEATER SECTOR A BE INCREASED ? — 614 — NO

YES

INCREASE POWER AMPLIFIER OUTPUT OF REPEATER SECTOR A — 615

UPLINK CONTROL

| REPEATER SECTOR #1 ON BASE STATION SIDE BASE STATION SECTOR ID | REPEATER SECTOR #2 ON BASE STATION SIDE BASE STATION SECTOR ID | REPEATER SECTOR #3 ON BASE STATION SIDE BASE STATION SECTOR ID |
|---|---|---|
| 500 | 384 | 64 |

## FIG. 21A

| | PA OUTPUT [mW] | REPEATER SECTOR #1 ON BASE STATION SIDE | REPEATER SECTOR #2 ON BASE STATION SIDE | REPEATER SECTOR #3 ON BASE STATION SIDE |
|---|---|---|---|---|
| REPEATER SECTOR #1 ON MOBILE STATION SIDE | 100.0 | ON | OFF | OFF |
| REPEATER SECTOR #2 ON MOBILE STATION SIDE | 100.0 | ON | OFF | OFF |
| REPEATER SECTOR #3 ON MOBILE STATION SIDE | 100.0 | ON | OFF | OFF |

## FIG. 21B

| | PA OUTPUT [mW] | REPEATER SECTOR #1 ON BASE STATION SIDE | REPEATER SECTOR #2 ON BASE STATION SIDE | REPEATER SECTOR #3 ON BASE STATION SIDE |
|---|---|---|---|---|
| REPEATER SECTOR #1 ON MOBILE STATION SIDE | 100.0 | ON | OFF | OFF |
| REPEATER SECTOR #2 ON MOBILE STATION SIDE | 100.0 ⇒ 0.0 | ON ⇒ OFF | OFF ⇒ ON | OFF |
| REPEATER SECTOR #3 ON MOBILE STATION SIDE | 100.0 | ON | OFF | OFF |

**FIG. 21C**

| | PA OUTPUT [mW] | REPEATER SECTOR #1 ON BASE STATION SIDE | REPEATER SECTOR #2 ON BASE STATION SIDE | REPEATER SECTOR #3 ON BASE STATION SIDE |
|---|---|---|---|---|
| REPEATER SECTOR #1 ON MOBILE STATION SIDE | 100.0 | ON | OFF | OFF |
| REPEATER SECTOR #2 ON MOBILE STATION SIDE | 0.0 ⇒ 100.0 | OFF | ON | OFF |
| REPEATER SECTOR #3 ON MOBILE STATION SIDE | 100.0 | ON | OFF | OFF |

**FIG. 21D**

**FIG. 22**

| REPEATER SECTOR #1 ON BASE STATION SIDE BASE STATION SECTOR ID | REPEATER SECTOR #2 ON BASE STATION SIDE BASE STATION SECTOR ID | REPEATER SECTOR #3 ON BASE STATION SIDE BASE STATION SECTOR ID |
|---|---|---|
| 500 | 384 | 64 |

*FIG. 23A*

| | PA OUTPUT [mW] | REPEATER SECTOR #1 ON MOBILE STATION SIDE | REPEATER SECTOR #2 ON MOBILE STATION SIDE | REPEATER SECTOR #3 ON MOBILE STATION SIDE |
|---|---|---|---|---|
| REPEATER SECTOR #1 ON BASE STATION SIDE | 100.0 | ON | ON | ON |
| REPEATER SECTOR #2 ON BASE STATION SIDE | 0.0 | OFF | OFF | OFF |
| REPEATER SECTOR #3 ON BASE STATION SIDE | 0.0 | OFF | OFF | OFF |

*FIG. 23B*

| | PA OUTPUT [mW] | REPEATER SECTOR #1 ON MOBILE STATION SIDE | REPEATER SECTOR #2 ON MOBILE STATION SIDE | REPEATER SECTOR #3 ON MOBILE STATION SIDE |
|---|---|---|---|---|
| REPEATER SECTOR #1 ON BASE STATION SIDE | 100.0 | ON | ON ⇒ OFF | ON |
| REPEATER SECTOR #2 ON BASE STATION SIDE | 0.0 | OFF | OFF ⇒ ON | OFF |
| REPEATER SECTOR #3 ON BASE STATION SIDE | 0.0 | OFF | OFF | OFF |

## FIG. 23C

| | PA OUTPUT [mW] | REPEATER SECTOR #1 ON MOBILE STATION SIDE | REPEATER SECTOR #2 ON MOBILE STATION SIDE | REPEATER SECTOR #3 ON MOBILE STATION SIDE |
|---|---|---|---|---|
| REPEATER SECTOR #1 ON BASE STATION SIDE | 100.0 | ON | OFF | ON |
| REPEATER SECTOR #2 ON BASE STATION SIDE | 0.0 ⇒ 100.0 | OFF | ON | OFF |
| REPEATER SECTOR #3 ON BASE STATION SIDE | 0.0 | OFF | OFF | OFF |

## FIG. 23D

FIG. 24

**FIG. 25**

| REPEATER SECTOR #1 ON BASE STATION SIDE<br>BASE STATION SECTOR ID | REPEATER SECTOR #2 ON BASE STATION SIDE<br>BASE STATION SECTOR ID | REPEATER SECTOR #3 ON BASE STATION SIDE<br>BASE STATION SECTOR ID |
|---|---|---|
| 500 | 384 | 64 |

## FIG. 26A

|  | PA OUTPUT [mW] | REPEATER SECTOR #1 ON MOBILE STATION SIDE | REPEATER SECTOR #2 ON MOBILE STATION SIDE | REPEATER SECTOR #3 ON MOBILE STATION SIDE |
|---|---|---|---|---|
| REPEATER SECTOR #1 ON BASE STATION SIDE | 100.0 | 0[dB] | 0[dB] | 0[dB] |
| REPEATER SECTOR #2 ON BASE STATION SIDE | 0.0 | 100[dB] | 100[dB] | 100[dB] |
| REPEATER SECTOR #3 ON BASE STATION SIDE | 0.0 | 100[dB] | 100[dB] | 100[dB] |

## FIG. 26B

| | PA OUTPUT [mW] | REPEATER SECTOR #1 ON MOBILE STATION SIDE | REPEATER SECTOR #2 ON MOBILE STATION SIDE | REPEATER SECTOR #3 ON MOBILE STATION SIDE |
|---|---|---|---|---|
| REPEATER SECTOR #1 ON BASE STATION SIDE | 100.0 | 0[dB] | 0⇒100[dB] | 0[dB] |
| REPEATER SECTOR #2 ON BASE STATION SIDE | 0.0 | 100[dB] | 100⇒0[dB] | 100[dB] |
| REPEATER SECTOR #3 ON BASE STATION SIDE | 0.0 | 100[dB] | 100[dB] | 100[dB] |

# FIG. 26C

| | PA OUTPUT [mW] | REPEATER SECTOR #1 ON MOBILE STATION SIDE | REPEATER SECTOR #2 ON MOBILE STATION SIDE | REPEATER SECTOR #3 ON MOBILE STATION SIDE |
|---|---|---|---|---|
| REPEATER SECTOR #1 ON BASE STATION SIDE | 100.0 | 0[dB] | 100[dB] | 0[dB] |
| REPEATER SECTOR #2 ON BASE STATION SIDE | 0.0 ⇒ 100.0 | 100[dB] | 0[dB] | 100[dB] |
| REPEATER SECTOR #3 ON BASE STATION SIDE | 0.0 | 100[dB] | 100[dB] | 100[dB] |

# FIG. 26D

| ITEM | VALUE |
|---|---|
| NUMBER OF BASE STATION SECTORS | 3 |
| BASE STATION SECTOR ID | 500 |
| DOWNLINK THROUGHPUT [Mbps] | 20 |
| UPLINK THROUGHPUT [Mbps] | 15 |
| BASE STATION SECTOR ID | 652 |
| DOWNLINK THROUGHPUT [Mbps] | 30 |
| UPLINK THROUGHPUT [Mbps] | 15 |
| BASE STATION SECTOR ID | 896 |
| DOWNLINK THROUGHPUT [Mbps] | 5 |
| UPLINK THROUGHPUT [Mbps] | 15 |

## FIG. 27

FIG. 28

## REFERENCES CITED IN THE DESCRIPTION

**Patent documents cited in the description**

- JP 2008205760 A

- JP 2005252938 A

**Non-patent literature cited in the description**

- **Naga Bhushan.** QUALCOMM Proposal for 3GPP2 Air Interface Evolution Phase 2, Rev. 2. *3GPP2, C30-20060327-023R2,* March 2006, 125

- Physical Layer for Ultra Mobile Broadband (UMB) Air Interface Specification. *3GPP2, C. S0084-001-0, Version 2.0,* August 2007, 4-41